# EUROPEAN PATENT APPLICATION

(11) **EP 2 594 911 A2**
(43) Date of publication of application: **22.05.2013**
(21) Application number: 12192286.8
(22) Date of filing: 12.11.2012
(51) Int. Cl.: G01G 19/414, G01G 23/16

(54) **Weighing device**

(30) Priority: 18.11.2011 JP 2011253332
(71) Applicant: ISHIDA CO., Ltd., Kyoto-shi, Kyoto 606 (JP)
(72) Inventor: Yamaguchi, Yasushi, Kyoto-shi, Kyoto 606-8392 (JP); Tsugawa, Tono, Kyoto-shi, Kyoto 606-8392 (JP); Ota, Koichi, Kyoto-shi, Kyoto 606-8392 (JP); Aoyama, Kengo, Ritto-shi, Shiga 520-3026 (JP); Matsuura, Tamaki, Ritto-shi, Shiga 520-3026 (JP); Ishibashi, Tsuyoshi, Ritto-shi, Shiga 520-3026 (JP); Tanaka, Masatsugu, Ritto-shi, Shiga 520-3026 (JP)
(74) Representative: Hards, Andrew

(57) **Abstract**

A weighing device includes a weighing unit, a camera, an identifying unit, a product weight calculation unit, a label printer unit, a person sensor and a shopper-side notification unit. The weighing unit measures weight of a container and a product therein selected by a shopper to produce a weight value. The camera detects the size of the container. The identifying unit identifies the container based on size. The product weight calculation unit subtracts weight of the identified container from the weight value to calculate the weight of a product. The label printer unit prints a label displaying the price of the product based on the weight of the product. The person sensor detects whether or not the shopper is present at the weighing device. The shopper-side notification unit guides the shopper through purchasing and label printing in response to the person sensor detecting the presence of the shopper.

## Description

### TECHNICAL FIELD

The present invention pertains to a weighing device, and in particular to a self-service weighing device for weighing an object constituted by a product placed by a shopper into a container selected by the shopper.

### BACKGROUND

Conventionally, products are sold by weight at food counters in shops such as department stores and supermarkets. When selling a product by weight, a weighing device having functions of weighing the product and printing a label displaying a price according to the weight of the product is used, as disclosed, for example, JP 2007-107957 A.

### SUMMARY OF THE INVENTION

### Technical Problem

In recent years, with the diversification of product purchasing styles, the so-called self-service purchasing style, in which shoppers themselves perform the actions of selecting a desired container from among a plurality of container types and placing a product in the container, has appeared. In this style, shoppers themselves use the weighing device, leading to a demand for the operation of the weighing device to be simplified.

However, many such weighing devices repeatedly play a video illustrating the purchasing procedure for the devices when no operation is being performed. In such cases, the shopper must memorize the content (i.e., the purchasing procedure) of the video being repeatedly played, leading to inconvenience during actual operation.

Thus, an object of the present invention is to provide a weighing device for improving convenience for shoppers.

### Solution to Problem

The weighing device is a self-service weighing device for weighing a product placed by a shopper into a container, the product and the container being selected by the shopper. The weighing device is provided with a weighing unit, a container detector unit, an identifying unit, a calculation unit, a printer unit, a person detector unit, and a shopper-side notification unit. The weighing unit receives the container and the product placed thereon by the shopper, the weighing unit measuring the weight of the container and the product producing a weight value. The container detector unit detects the size of the container. The identifying unit identifies the container selected by the shopper based on the size of the container detected by the container detector. The calculation unit subtracts the weight of the container identified by the identifying unit from the weight value and calculates the weight of the product. The printer unit prints a label displaying the price of the product based on the weight of the product. The person detector unit detects whether or not the shopper is present in the vicinity of the weighing device. The shopper-side notification unit for guides the shopper, using visual and audio representation, through a purchasing procedure and operating procedure of the printer unit so as to print the label and attaching the label to the container, in response to the person detector unit detecting the presence of the shopper.

According to the present weighing device, shoppers are notified of the purchase procedure by visual and audio representation, enabling shoppers to operate the device according to the correct procedure. Moreover, because the weighing device automatically identifies the container selected by the shopper, shoppers do not need to directly input the selected container into the weighing device themselves. This improves shopper convenience. In addition, inputting of improper containers by shoppers can be prevented.

A different weighing device from that described above is a self-service weighing device for weighing a product placed by a shopper into a container selected by the shopper, the device includes a weighing unit, a calculation unit, a printer unit, a person detector unit and a shopper-side notification unit. The weighing unit receives the container and the product placed thereon by the shopper. The weighing unit measures the weight of the container and the product producing a weight value. The calculation unit subtracts the weight of the container from the weight value and calculates the weight of the product. The printer unit prints a label displaying the price of the product based on the weight of the product. The person detector unit detects whether or not the shopper is present in the vicinity of the weighing device. The shopper-side notification unit guides the shopper, using visual and audio representation, through a purchasing procedure, including operating the printer unit so as to print the label and attach the label to the container in response to the person detector unit detecting the presence of the shopper, and in response to the shopper-side notification unit detecting that the shopper has left the vicinity of the weighing device, and detecting that there is a label is remaining in the printer unit, the shopper-side notification unit producing a notification notifying the shopper that the shopper has forgot to take the label.

According to the present weighing device, shoppers are notified of the purchase procedure by visual and audio representation, and are thus able to operate the device according to the correct procedure. It is also possible to prevent that shopper has been accidentally forgot to take the label.

The weighing device according to the device described above, which notifies shoppers forget to take the label, may also be further provided with a container detector unit and an identifying unit. The container detector unit detects the size of the container. The identifying unit identifies the container selected by the shopper based on the size of the detected container. In such cases, the calculation unit can subtract the weight of the identified container from the weight value of the product and calculate the weight of the product.

Because the weighing device automatically identifies the container selected by the shopper, shoppers are spared the need to directly input the selected container into the weighing device themselves. Therefore, not only is it possible to prevent forgetting to accidentally take the label, but shopper convenience can also be improved and selection of improper containers by shoppers can be prevented.

The weighing device is preferably further provided with a movement detector unit for detecting the movement of attaching of the label.

This allows store staff to confirm whether the act of attaching the label was properly performed by the shopper on the weighing device.

The movement detector unit detects the weight of the container and product based on whether the attaching of the label was performed with the container and product having been taken off the weighing unit. The movement detector unit detects movement corresponding to the attaching of the label indicating that the attaching was performed with the container and product having been taken off the weighing unit. The shopper-side notification unit notifies the shopper that the container and the product must be reweighted using visual and audio representation.

An example might be a shopper maliciously placing product into two containers of different sizes, then having the weighing device print labels for each of the containers. The shopper is attempting to illicitly attach a label with a low price to a container with a high price. However, according to the weighing device, when the act of attaching the label is performed after taking the container and product off of the weighing device once, the shopper is notified the guidance of reweighing the container and product, preventing malicious shoppers from engaging in the illicit behavior described above.

The weighing device also preferably further has a store-side notification unit. The store-side notification unit notifies a store employee when the person detector unit continuously detects the presence of a shopper for a predetermined length of time or longer.

In such cases, the shopper has continuously been in the vicinity of the weighing device for a comparatively long time, and thus may be assumed to be having some sort of difficulty. Having been so notified, the store employee can come to the assistance of the shopper, allowing the shopper to be provided with better service.

Product unit prices are preferably set on a product weight range basis. In such cases, the shopper-side notification unit can further notify the shopper, using visual and audio representation, of the weight difference between the weight calculated for the product and the lower limit value of the weight range for which the product unit price is less than the unit price that corresponding to the weight calculated for the product.

Shoppers can thereby find out how much more of a product needs to be purchased to be able to purchase the product at a unit price that is less than the current one.

The weighing device is preferably also provided with a communication unit. The communication unit is capable of communicating with at least one of a server storing a variety of product information and a register terminal for calculating the amount to charge a shopper. The communication unit also can transmit label-related information and the results of the detection performed by the movement detector unit to the server and/or the register terminal as grasping information for grasping the incidence of an improper action made by a shopper.

This allows the store to grasp how frequently illicit actions are being performed, enabling strategies for preventing such actions to be developed.

### Advantageous Effects of Invention

In accordance with the present invention, shoppers are notified of the purchase procedure using visual and audio representation, and are thus able to operate the device according to the correct procedure. Moreover, because the weighing device automatically identifies the container selected by the shopper, shoppers are spared the need to directly input the selected container into the weighing device themselves, improving shopper convenience. In addition, inputting of an improper container by shoppers can be prevented. Meanwhile, it is also possible to prevent shopper has been accidentally forgot to take the label.

### BRIEF DESCRIPTION OF THE DRAWINGS

FIG. 1 is an external view of a weighing device according to a first embodiment;

FIG. 2 is a view of the weighing device from the lateral direction;

FIG. 3 is an illustration of a weighing device connected to a server and register terminals;

FIG. 4 is a schematic illustration of the configuration of the weighing device according to the first embodiment;

FIG. 5 is an example of a printed label;

FIG. 6 is an example of a printed coupon;

FIG. 7 is an example of a screen displayed on a first touch panel during purchasing procedure guidance;

FIG. 8 is an example of a screen displayed on the first touch panel during purchasing procedure guidance;

FIG. 9 is an example of a screen displayed on the first touch panel during purchasing procedure guidance;

FIG. 10 is an example of a screen displayed on the first touch panel during purchasing procedure guidance;

FIG. 11 is a conceptual illustration showing product unit price being set according to product weight range;

FIG. 12 is an example of a screen displayed on the first touch panel during purchasing procedure guidance, the screen notifying a shopper that the unit price of the product will decrease when more of the product is purchased;

FIG. 13 is a conceptual illustration of a container information table according to the first embodiment;

FIG. 14 is a flow chart showing the order of a series of actions performed for shoppers out of those actions performed by the weighing device according to the first embodiment;

FIG. 15 is a flow chart showing the order of a series of actions performed for shoppers out of those actions performed by the weighing device according to the first embodiment;

FIG. 16 is a flow chart of actions primarily relating to a second touch panel out of those actions performed by the weighing device according to the first embodiment;

FIG. 17 is a schematic illustration of the configuration of a weighing device according to a second embodiment;

FIG. 18 is an example of a screen displayed on a first touch panel according to the second embodiment, the screen providing notification that a label has been accidentally left behind;

FIG. 19 is an example of a screen displayed on the first touch panel according to the second embodiment, the screen providing instructions to reweigh an obj ect;

FIG. 20 is a conceptual illustration of a container information table according to the second embodiment;

FIG. 21 is a flow chart showing the order of a series of actions performed for shoppers out of those actions performed by the weighing device according to the second embodiment;

FIG. 22 is a flow chart showing the order of a series of actions performed for shoppers out of those actions performed by the weighing device according to the second embodiment;

FIG. 23 is a schematic illustration of the configuration of the weighing device according to a third embodiment;

FIG. 24 is a flow chart showing the order of a series of actions performed for shoppers out of those actions performed by the weighing device according to the third embodiment;

FIG. 25 is a flow chart showing the order of a series of actions performed for shoppers out of those actions performed by the weighing device according to the third embodiment;

FIG. 26 is an example of a screen displayed on a first touch panel of a modification D, the screen including a button for calling a store employee;

FIG. 27 is an external view of a weighing device according to a modification F; and

FIG. 28 is an illustration of two or more products being placed on a weighing unit of a weighing device according to a modification O.

### DESCRIPTION OF EMBODIMENTS

There follows a description of a weighing device according to one embodiment of the present invention with reference to the drawings.

### First Embodiment

### (1) Overview

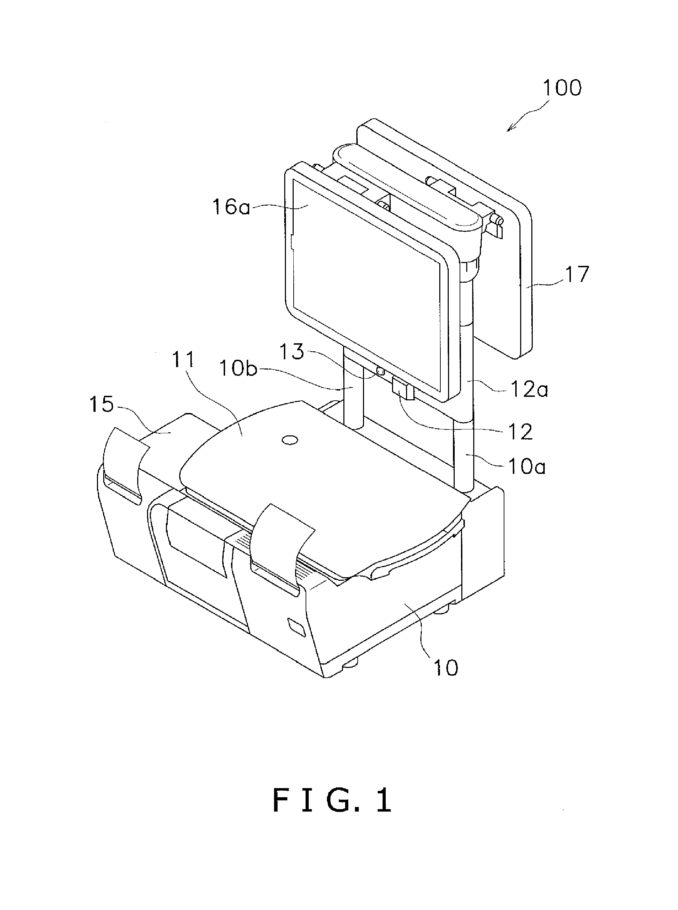

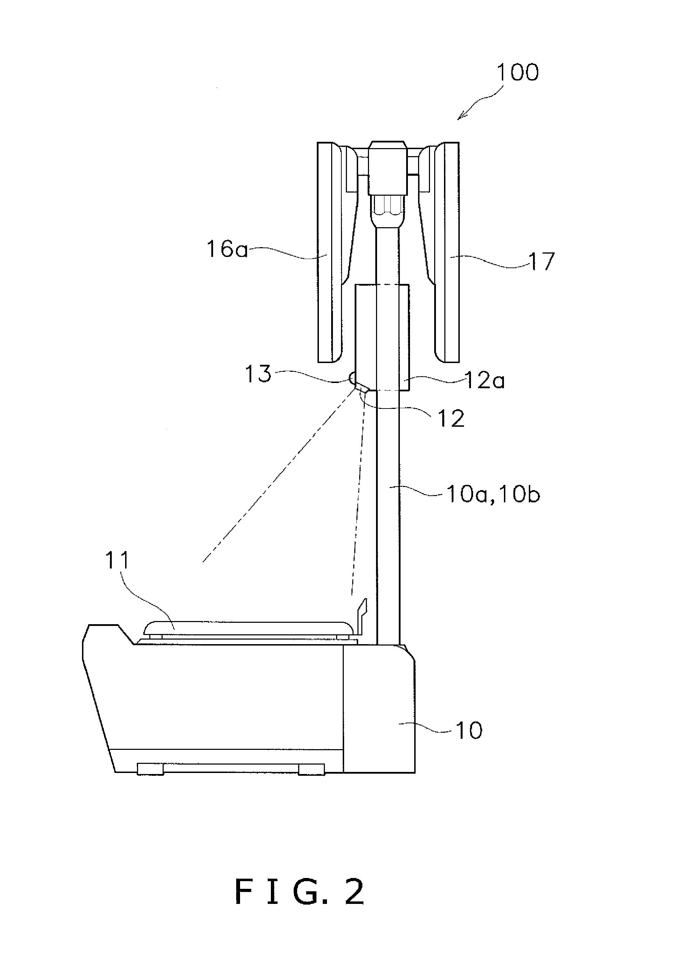

FIG. 1 is an external view of a weighing device 100 according to an embodiment of the present invention, and FIG. 2 is an illustration of the weighing device 100 viewed from the lateral direction (specifically, the right direction). The weighing device 100 is set up at, for example, a food counter (specifically, a prepared foods corner) of a store such as a department store or supermarket, and is a self-service weighing device for weighing a shopper's preferred prepared food or other product in a desired container. The container with the selected product are referred to there in below as "the object". It should be understood from the drawings and the description herein that "the object" refers to both the container and the product selected by the shopper. In particular, the weighing device 100 according to the present embodiment is capable of determining the weight of the product alone, even though the weighing device 100 is weighing the product and the container, with the product being placed within the container, regardless of which of the plurality of types of container the shopper has selected to place product in, without the need for the shopper to input the selected container into the weighing device, and is further capable of outputting a label displaying a price according to the results. The outputted label is attached by the shopper to the container. The weighing device 100 according to the present embodiment is further capable of facilitating the purchasing procedure by guiding the shopper through the purchasing procedure from the act by the shopper of using the device 100 to weigh the object to the act by the shopper of attaching the label to the container.

In the example of the present embodiment discussed here, each of the products freely selected by the shopper from among the plurality of available products and placed in the container is assumed to have the same product unit price.

As shown in FIGS. 1 and 2, the weighing device 100 primarily has a main unit 10, a weighing unit 11, a coupon printer unit 15, a first touch panel 16a, and a second touch panel 17, and those components are externally visible. The main unit 10 is set on the installation position of the weighing device 100, which acts as the base of the weighing device 100, and the weighing unit 11 is positioned near the upper surface of the main unit 10. The coupon printer unit 15 is installed on the side of the main unit 10 separately from the main unit 10. The first touch panel 16a and second touch panel 17 are supported above the main unit 10 by two support rods 10a, 10b extending in the perpendicular direction from the rear surface of the main unit 10, and the panels 16a, 17 are disposed so that the rear surfaces thereof oppose each other. Specifically, the surface of the first touch panel 16a faces towards the front of the weighing device 100 so as to be visible to shoppers. The surface of the second touch panel 17 faces towards the rear of the weighing device 100.

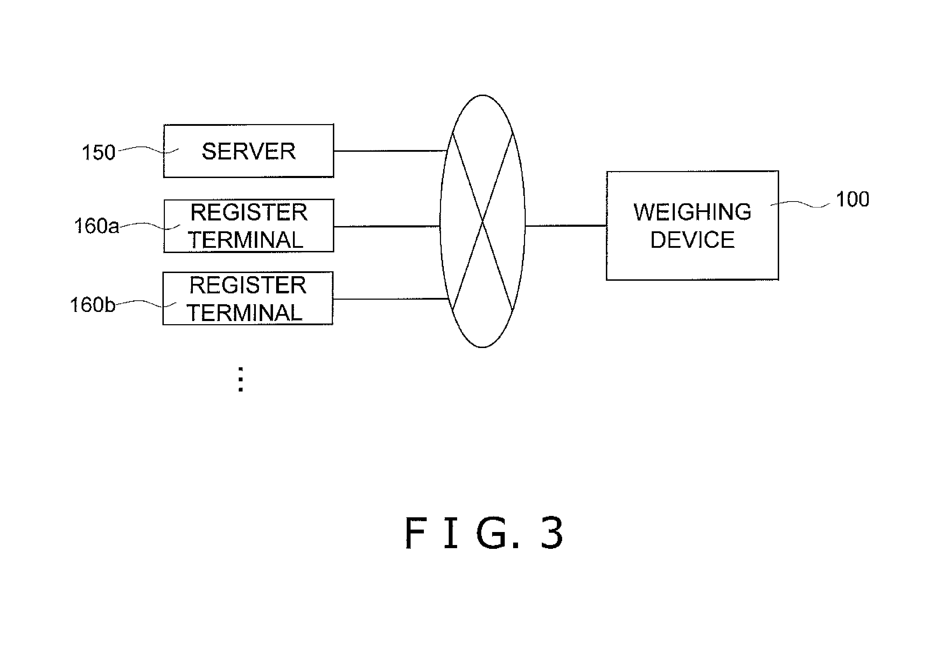

As shown in FIG. 3, the weighing device 100 is communicably connected to a server 150 and register terminals 160a, 160b, .... It should be understood that any of a number of register terminals can be connected to the weighing device 100. For example, the store equipped with the weighing device 100 can have only two register terminals, or can have 50 register terminals. Therefore, the reference to the register terminals 160a, 160b ... can refer to any total number of register terminals within a store. The server 150 stores a variety of product-related information. The register terminals 160a, 160b, ... calculate the amount to be charged to the shopper, the change for the payment tendered by the shopper, and the like. The register terminals 160a, 160b, ... and the server 150 are also communicably connected. Information (specifically, product price, product number, and the like) related to the product inputted into the register terminals 160a, 160b, ... is sent to the server 150, and the information is accumulated. It should also be understood from the drawings and the description herein that a plurality of weighing devices 100 can be provided within a store and can all be connected to the server 150 and the register terminals 160a, 160b, ...

### (2) Configuration

As shown in FIGS. 1, 2, and 4, the weighing device 100 primarily has the weighing unit 11, a camera 12 (equivalent to a container detector unit and a movement detector unit), a person sensor 13 (equivalent to a person detector unit), a label printer unit 14, a coupon printer unit 15, a shopper-side notification unit 16 having the first touch panel 16a, the second touch panel 17, a store-side wireless unit 18, a communication unit 19, an HDD 20, and a control unit 30. Of these components, those components other than the weighing unit 11, the camera 12, the person sensor 13, the coupon printer unit 15, the first touch panel 16a of the shopper-side notification unit 16, and the second touch panel 17 are housed within the main unit 10 shown in FIG. 1.

### (2-1) Weighing unit

The weighing unit 11 is constituted by a weighing surface includes a flat metal sheet, and a spring or the like. When a shopper places an object on the weighing unit 11, the weighing unit 11 weighs the object (the container and the product the shopper has placed in the container).

### (2-2) Camera

As shown in FIGS. 1 and 2, the camera 12 is mounted to a support member 12a bridging the gap between the two support rods 10a, 10b near the first and second touch panels 16a, 17. The camera 12 is mounted so as to be capable of photographing an obj ect resting upon the weighing surface of the weighing unit 11 from above the weighing unit 11. The camera 12 detects the size of the container holding the object resting on the weighing surface of the weighing unit 11. The detected size of the container holding the object is used by the control unit 30 to identify the container as described below.

The camera 12 is also capable of reading member-identifying information displayed on a member card placed on the weighing surface of the weighing unit 11. Specifically, let us assume that a store issues a member card, upon which is a barcode representing member-identifying information such as a member number. When the barcode-bearing surface of the member card is placed on the weighing surface before the object is placed on the weighing surface and weighed, the camera 12 reads the member card barcode, i.e., the member-identifying information. The read member-identifying information is used to issue a coupon as described below. The member card may be any kind allowing member-related information to be read, and can be, for example an IC card or a magnetic card.

Moreover, the camera 12 can also photograph the movement that the shopper attaching a label to a container on the weighing surface of the weighing unit 11. Thus, when a shopper deliberately attempts to attach a label different from the label corresponding to the object, the act is photographed. This is effective in discovering and preventing illicit activity.

### (2-3) Person sensor

The person sensor 13, like the camera 12, is mounted on the support member 12a, as shown in FIGS. 1 and 2. The person sensor 13 is mounted on the support member 12a so that the detecting part thereof faces the front of the weighing device 100. The person sensor 13 is constituted by, for example, an infrared sensor, and detects the presence of a shopper in the vicinity of the weighing device 100 (i.e. whether or not the shopper is present in the vicinity of the weighing device). The results detected by the person sensor 13 are used as a trigger or the like to begin purchasing procedure guidance as described below.

### (2-4) Label printer unit

The label printer unit 14 is constituted by a label cassette, a plurality of sensors, and the like. The label printer unit 14 prints a label which the shopper attaches to the container, by prints a price and the like based on the weight of the product onto blank paper discharged from the label cassette. The blank paper used for the label is adhesive on its rear surface.

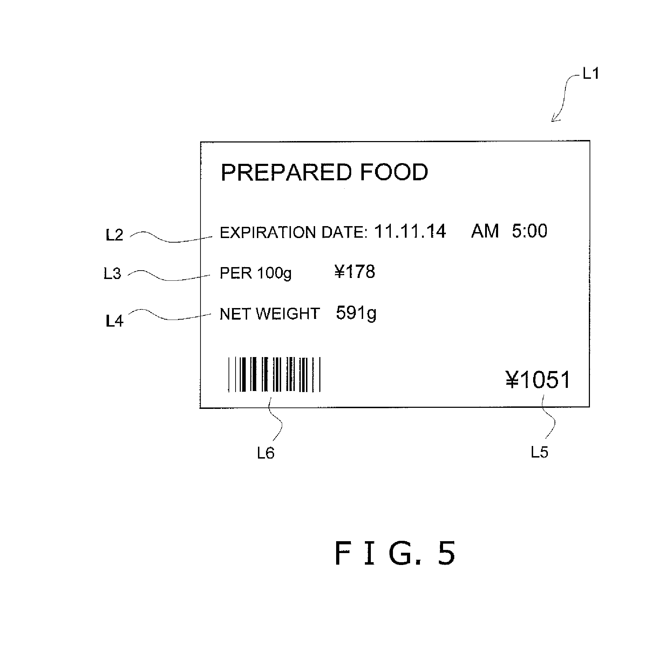

FIG. 5 depicts a label L1 as an example of a label printed by the label printer unit 14. The label L1 in FIG. 5 is printed with an expiration date L2, a unit price L3 per 100 g product, a net weight L4 showing the weight of the product, a price L5 corresponding to the weight of the product, and a barcode L6 representing the price L5.

The abovementioned sensors are, for example, a sensor for detecting the remaining amount of a blank paper roll in the label cassette, a sensor for detecting that the shopper has taken the printed label, and the like.

### (2-5) Coupon printer unit

The coupon printer unit 15 is constituted by a cassette for printing coupons, a plurality of sensors, and the like. When the camera 12 reads member-identifying information on a member card, the coupon printer unit 15 prints a coupon showing information regarding discounts the shopper can receive on blank paper discharged from the cassette. The blank paper used for the coupons is different from the blank paper roll used for labels, and is not adhesive on either surface.

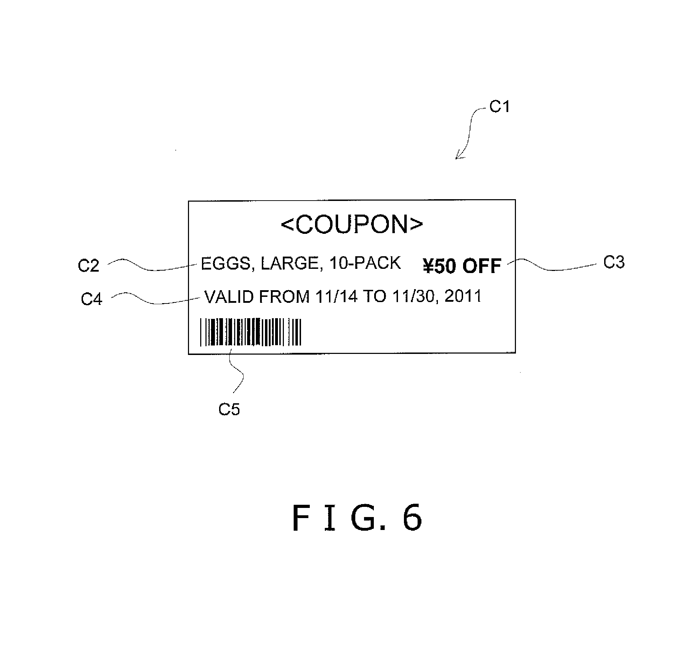

FIG. 6 depicts a coupon C1 as an example of a coupon printed by the coupon printer unit 15. The coupon C1 in FIG. 6 is printed with a discounted product name C2, a discount amount C3, an expiration date C4 for the coupon C1, and a bar code C5 for the discount amount C3.

The coupon is preferably printed for the shopper who purchased the product. Therefore, an example of the timing when the coupon printer unit 15 prints a coupon is when the label printer unit 14 is printing a label after the object has been weighed.

The sensors constituting the coupon printer unit 15 are, for example, a sensor for detecting the amount of blank paper roll remaining in the cassette, as in the case of the label printer unit 14, a sensor for detecting that the shopper has taken the printed coupon, and the like.

### (2-6) Shopper-side notification unit

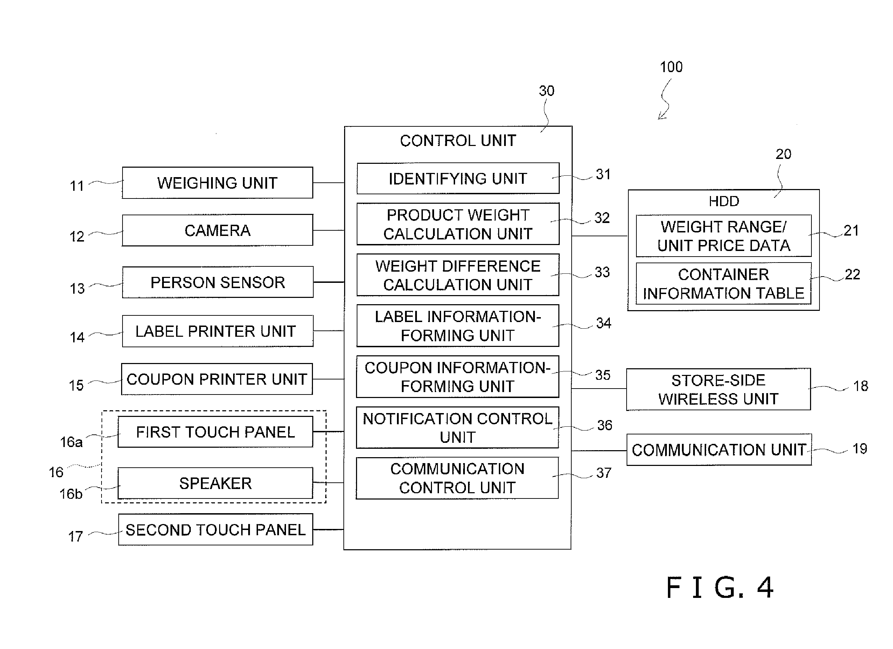

As shown in FIG. 4, the shopper-side notification unit 16 has a first touch panel 16a and a speaker 16b. In other words, the shopper-side notification unit 16 is capable of transmitting (i.e. notifying) the information being announced to the shopper not only visually, but also aurally.

### (2-6-1) First touch panel

The first touch panel 16a displays various screens to shoppers. In particular, when the person sensor 13 detects the presence of a shopper approaching the weighing device 100, the first touch panel 16a begins displaying screen sc1, which is one of the screens for the purchasing procedure guidance. After screen sc1 has been displayed, the first touch panel 16a then displays, in order, other screens sc2, sc3 for the purchasing procedure guidance.

The purchasing procedure referred to in the present embodiment includes the acts of printing a label using the label printer unit 14 and the shopper applying the label to a container. More specifically, the purchasing procedure includes the following three steps.

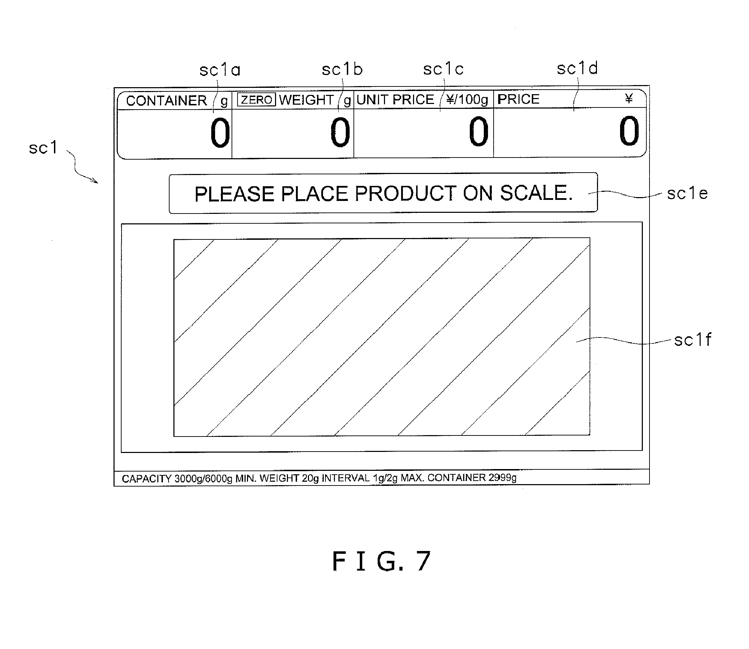

Step 1: prompt shopper to place the object on the weighing surface of the weighing unit 11 (screen sc1 in FIG. 7).

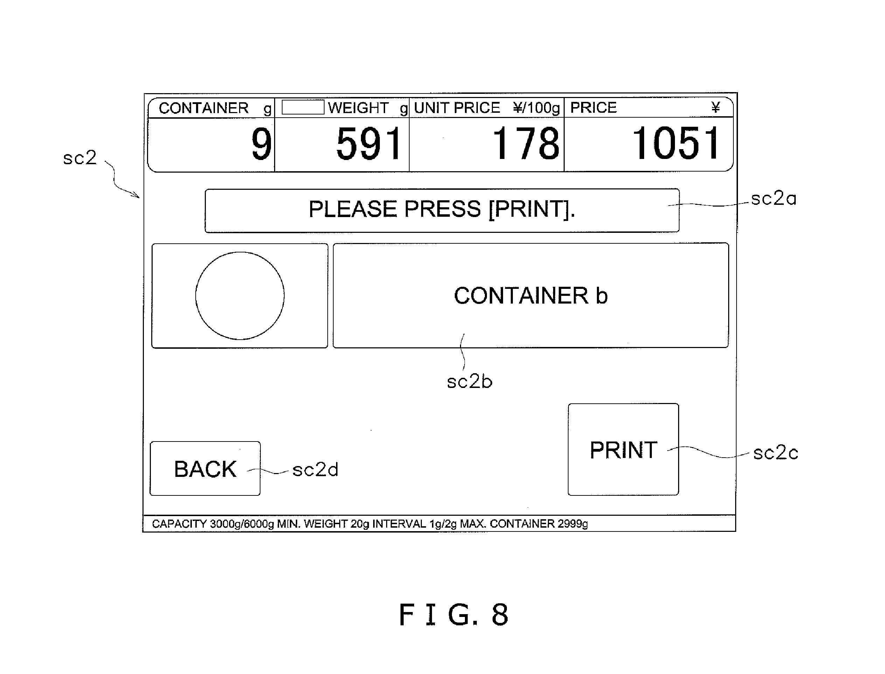

Step 2: prompt shopper to press a PRINT button sc2c on screen sc2 displayed on the first touch panel 16a in order to print a label including price and other information according to product weight (screen sc2 in FIG. 8).

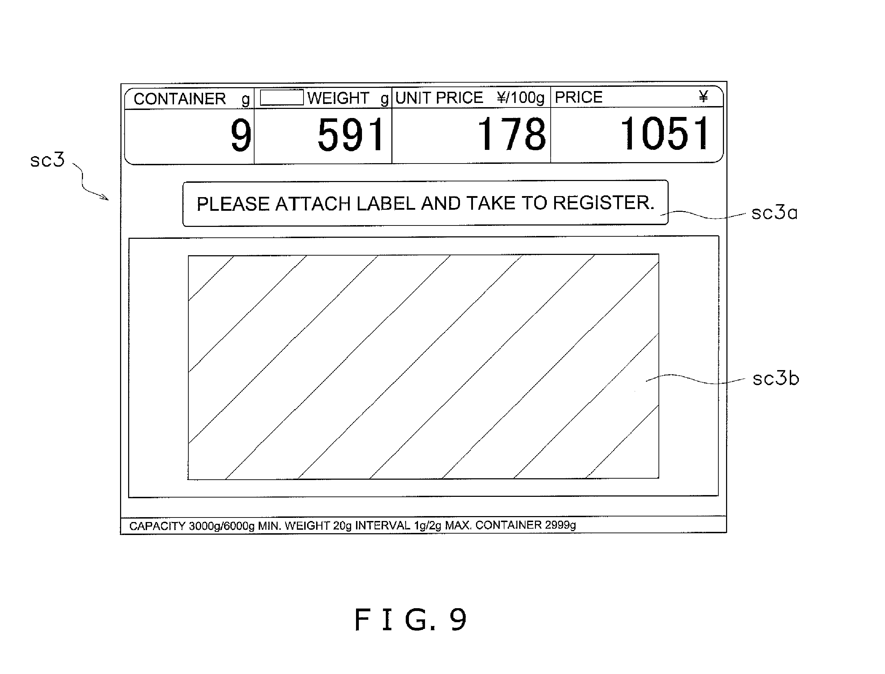

Step 3: prompt shopper to attach the label printed by pressing the PRINT button sc2c to the container holding the object (screen sc3 in FIG. 9).

As shown in steps 1―3 above, the purchasing procedure according to the present embodiment does not include a step of having the shopper input the selected container. This is because the camera 12 detects the size of the container holding the object when the object is placed on the weighing unit 11 by the shopper, and automatically identifies the type of container used.

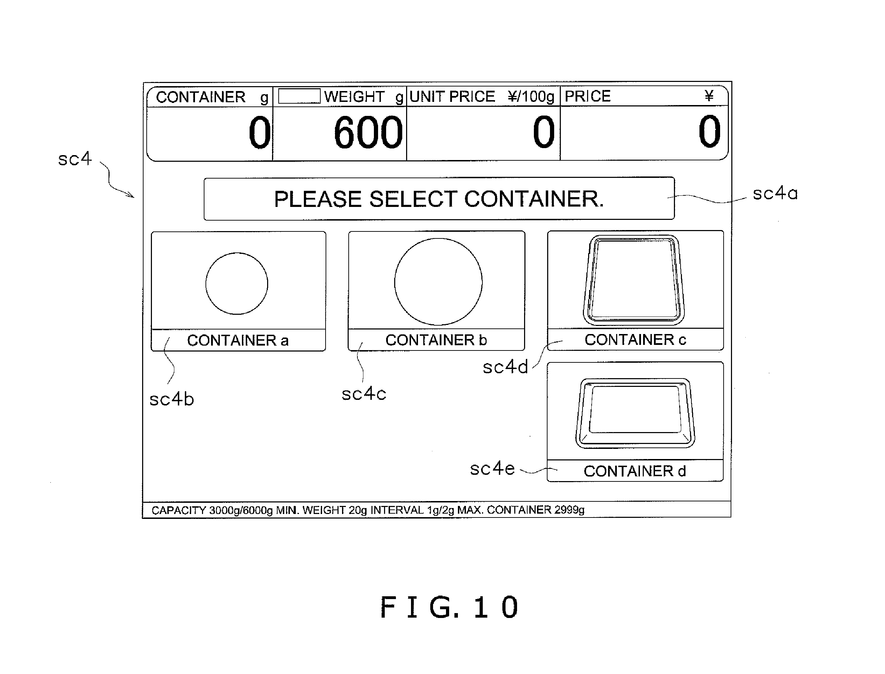

On the other hand, when the size of the container holding the object cannot be detected using the camera 12, or when the container cannot be identified due to the detected container size applying to two or more container types, a screen sc4 as shown in FIG. 10 may be displayed on the first touch panel 16a between step 1 and step 2. Screen sc4 is a screen for having the shopper input the selected container.

The information contained in the various screens sc1 to sc4 will be briefly described. Screen sc1 includes a container weight sc1a, a weight of the object (or, product weight) sc1b, a unit price per 100 g product sc1c, a product price sc1d, a message sc1e instructing the shopper to place an object on the weighing unit 11, and a video sc1f of an object being placed on the weighing unit 11. A still image or animation may also be used instead of the video sc1f. Screen sc1 is continuously displayed on the first touch panel 16a during the time from when a shopper approaches the weighing device 100 to when an object is placed on the weighing unit 11, or for a predetermined period of time after the shopper approaches the weighing device 100. The container weight sc1a, weight of the object sc1b, unit price per 100 g product sc1c, and product price sc1d are also displayed on the other screens sc2 to sc4 in common.

Screen sc2 includes a message sc2a prompting the shopper to press the PRINT button sc2c, as well as a container name sc2b, PRINT button sc2c, and BACK button sc2d. When the BACK button sc2d is pressed, screen sc1 is again displayed on the first touch panel 16a.

Screen sc3 contains a message sc3a prompting the shopper to attach the printed label to the container, as well as a video sc3b showing a label being attached to a container while the object is resting on the weighing unit 11. A still image or animation may also be used instead of the video sc3b. Screen sc3 is continuously displayed on the first touch panel 16a until the shopper moves away from the weighing device 100, or for a predetermined amount of time after the screen sc3 is displayed.

Screen sc4 includes a message sc4a prompting the shopper to select a container, as well as various types of selectable container-related information sc4b, sc4c, sc4d, and sc4e. The various types of container-related information sc4b to sc4e are displayed so that one is selectable. Screen sc4 is continuously displayed on the first touch panel 16a until the shopper selects one of the various types of container-related information sc4b to sc4e, or for a predetermined period of time after the screen sc4 is displayed.

When a predetermined amount of time passes after the screens sc1 to sc4 are displayed, and a shopper is not in the vicinity of the weighing device 100, it is determined that the shopper have canceled the purchasing procedure before finishing, and the first touch panel 16a finishes displaying the screens sc1 to sc4, even when in the middle of showing purchasing procedure guidance.

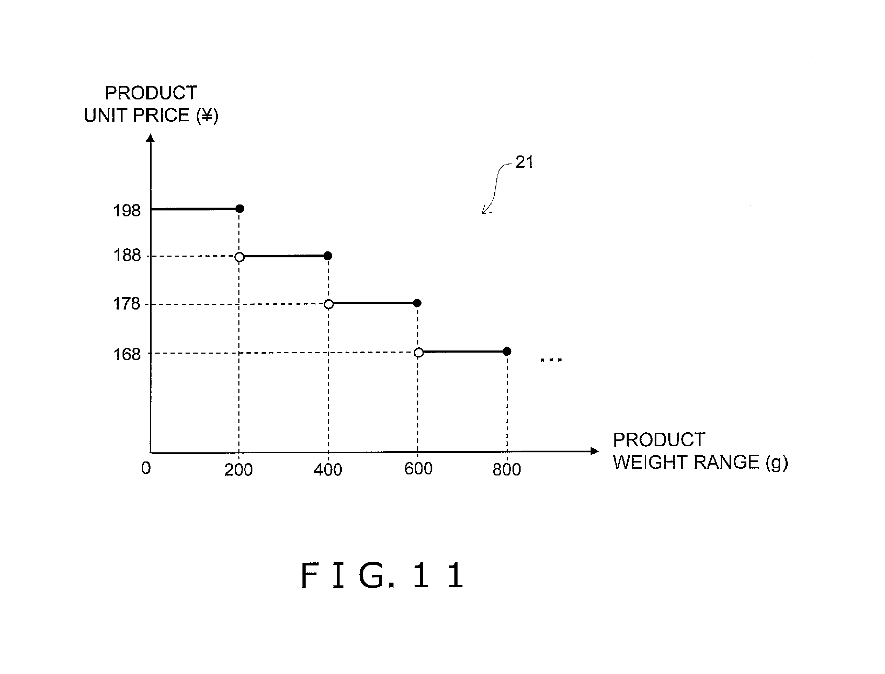

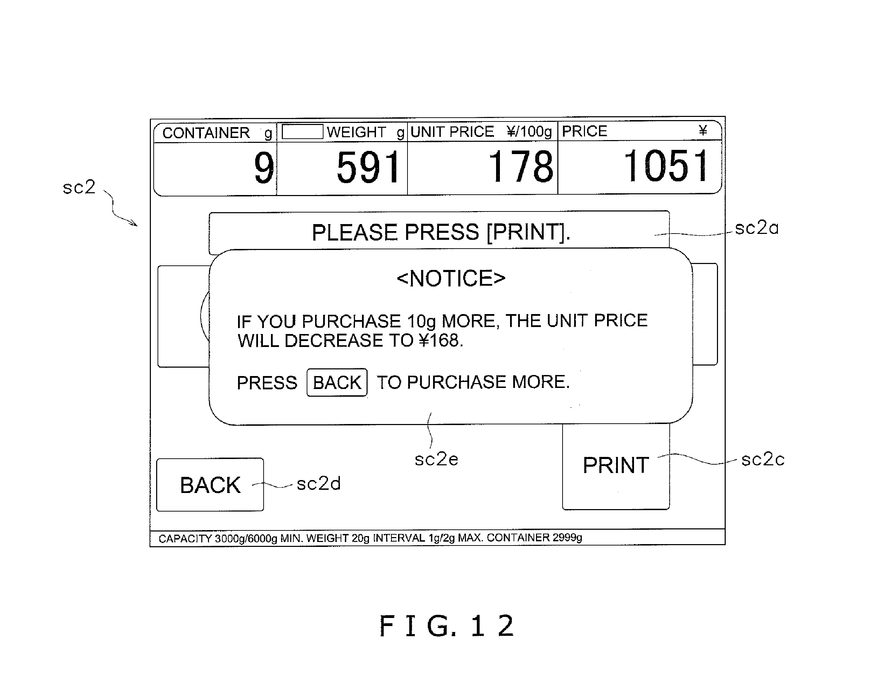

In the present embodiment, as shown in FIG. 11, the product unit price is set per product weight range. The first touch panel 16a is thereby capable of further displaying a message sc2e indicating how much more product must be purchased to lower the unit price, as shown in FIG. 12. FIG. 12 shows an instance of the message sc2e being shown in a pop-up display in screen sc2, corresponding to step 2. The "10 g" mentioned in the message sc2e corresponds to the weight difference of 10 g between the current weight of the product the shopper is purchasing and the lower limit value, " 601 g", of the weight range in which the current product unit price of "¥178" drops to "¥168" (601 g ― 591 g = 10 g).

### (2-6-2) Speaker

The speaker 16b is provided on the main unit 10, and provides audio output of various pieces of information to the shopper. In particular, when the person sensor 13 detects the presence of a shopper approaching the weighing device 100, the speaker 16b plays audio for messages sc1e, sc2a, sc3a, and sc4a on the displayed screens sc1 to sc4 according to the screens sc1 to sc4 displayed on the first touch panel 16a. For example, the speaker 16b plays message sc1e when screen sc1 is displayed on the first touch panel 16a, and message sc2a when screen sc2 is being displayed, respectively.

When message sc2e shown in FIG. 12 is shown in a pop-up display on the first touch panel 16a, the speaker 16b further plays message sc2e in tandem with the display.

### (2-7) Second touch panel

The second touch panel 17 displays various pieces of information for store employees. For example, when the blank paper roll in the label printer unit 14 or the coupon printer unit 15 reaches a predetermined remaining level or lower, the second touch panel 17 displays this information. When the number of unused containers reaches a predetermined number or fewer, the second touch panel 17 displays this information, as well as a selectable CONTAINERS REFILLED button (not shown).

The number of used containers can be grasped using the counted value of number of times a given size of container read by the camera 12, the counted value of number of times measured by the weighing unit 11, or the like. It is therefore possible to grasp the number of remaining unused containers by subtracting the counted value from the maximum number of containers that should be present. Meanwhile, when the CONTAINERS REFILLED button is pressed, the count value is reset.

### (2-8) Store-side wireless unit

The store-side wireless unit 18 is used for wirelessly communicating with a portable terminal (not shown) carried by a store employee.

When the person sensor 13 continuously detects the presence of a shopper for a predetermined amount of time or longer, the store-side wireless unit 18 notifies the portable terminal of the store employee of this fact. In such cases, the shopper has continuously been in the vicinity of the weighing device 100 for a comparatively long time, and thus can be assumed to be having some sort of difficulty. Therefore, upon receiving notice that a shopper has been present in the vicinity of the weighing device 100 for a predetermined amount of time or longer, the store employee can come and assist the shopper, allowing the shopper to be provided with better service.

When the remaining amount of the blank paper roll in the label printer unit 14 or the coupon printer unit 15 reaches a predetermined level or lower, or when the number of remaining unused containers reaches a predetermined number or fewer, the store-side wireless unit 18 can also communicate this information to the portable terminal carried by the store employee.

### (2-9) Communication unit

The communication unit 19 is capable of communicating with the server 150 and the register terminals 160a, 160b, ... shown in FIG. 3. In particular, the communication unit 19 according to the present embodiment transmits information regarding the labels printed by the label printer unit 14 and the results detected by the camera 12 to the server 150 and the register terminals 160a, 160b, ... as grasping information for grasping the incidence of illicit shopper actions. The grasping information is sent to the server 150 and the register terminals 160a, 160b, ... every time the weighing device 100 weighs an object.

Examples of the information (i.e., information regarding the labels) printed on the label include the product price shown on the label (L5 in FIG. 5), as well as the label printing time or the like. Examples of results detected by the camera 12 include the act of attaching the label captured by the camera 12 and the size of the container detected by the camera 12. In particular, by photographing a view of the entire receptacle, including the label attached thereto, and transmitting the captured image to the register terminals 160a, 160b, ..., it is possible to more easily identify the product by appearance.

Using the grasping information, when, for example, a store employee manning the register terminals 160a, 160b, ... notices a discrepancy between the price displayed on the label of the object brought to the register terminals 160a, 160b, ... and the apparent amount of the product, the store employee can compare the information on the label to the grasping information to determine whether illicit behavior has been engaged in. A store employee operating the server 150 can compare the information for the products inputted in the register terminals 160a, 160b, ... to the grasping information for each of the objects being weighed. Therefore, the store employee can grasp (recognize or identify) the incidence of illicit behavior and the like. An example of a discrepancy is when a shopper maliciously prints out labels having two different prices in advance, then attaches the label having the lower price to the container having the larger amount of product. Using the grasping information transmitted to the server 150 and the register terminals 160a, 160b, ... every time an object is weighed by the weighing device 100, a store employee can determine whether an illicit action has been performed, and grasp the incidence of illicit behavior, thereby enabling the store to formulate strategies against illicit behavior.

The grasping information transmitted by the communication unit 19 is accumulated in the server 150.

### (2-10) HDD

The HDD 20 primarily stores weight range/unit price data 21 and a container information table 22.

### (2-10-1) Weight range/unit price data

As shown in FIG. 11, the weight range/unit price data 21 shows the relationship between product weight range and unit price. The weight range/unit price data 21 is used when displaying the message sc2e shown in FIG. 12 for indicating how much more of a product must be purchased to lower its unit price on the first touch panel 16a.

FIG. 11 is a conceptual illustration of the relationship between product weight range and unit price. Specifically, in FIG. 11, the x-axis is product weight range (g) and the y-axis is unit price per 100 g product (¥), with the product unit price for the weight range 0 to 200 g being, for example, ¥198, and the product unit price for the weight range 201 to 400 g being ¥188. Thus, the product unit price is a constant value as long as the product weight is within a constant range in the present embodiment, but the product unit price is set so as to decrease as product weight increases.

### (2-10-2) Container information table

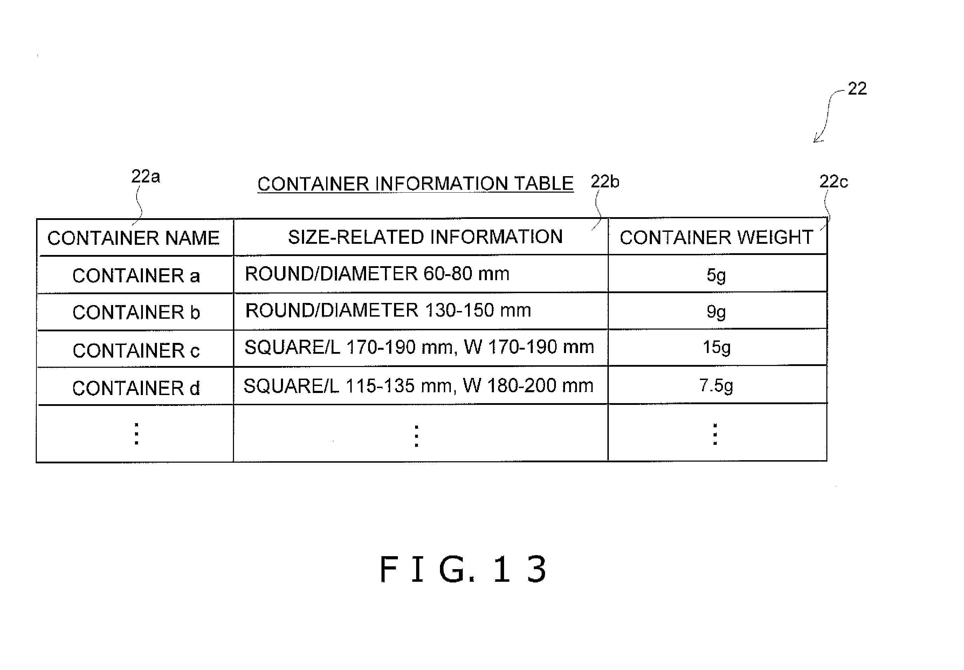

The container information table 22 is a table used in identifying the container, as described below, and calculating the weight of the product itself, as described below. In the container information table 22, as shown in FIG. 13, container name 22a, size-related information 22b, and container weight 22c are associated. The size-related information 22b includes the shape of the container as viewed from above, as well as its size.

The size of the container is expressed in terms of a predetermined width, as shown in FIG. 13. The container size is given a predetermined width in consideration of misdetections on the part of the camera 12, which automatically detects the size of the container.

### (2-11) Control unit

The controller 30 is a microcomputer constituted by a CPU, RAM, and ROM, and is connected to various components constituting the weighing device 100. The ROM stores a control program for controlling the weighing device 100. The CPU controls the weighing device 100 on the basis of the control program stored in the ROM. The RAM functions as so-called working memory when the CPU executes the control program stored in the ROM.

In particular, the control unit 30 according to the present embodiment performs container identification, product price calculation, purchasing procedure guidance control based on the results detected by the person sensor 13, and so on. In order to perform these various actions, the control unit 30 functions as an identifying unit 31, a product weight calculation unit 32 (equivalent to a calculation unit), a weight difference calculation unit 33, a label information-forming unit 34, a coupon information-forming unit 35, a notification control unit 36, and a communication control unit 37.

In the following description, the various functions performed by the control unit 30 will, for convenience, be described as being performed by the various functional units of the control unit 30 (specifically, the identifying unit 31, or the like).

### (2-11-1) Identifying unit

The identifying unit 31 identifies the container selected by the shopper on the basis of the size of the container detected by the camera 12. Specifically, when the camera 12 has detected the size of the container, the identifying unit 31 applies the detected results to the "size-related information 22b" in the container information table 22 shown in FIG. 13, and identifies the container selected by the shopper from the "container name 22a" on the record that corresponds to the "size-related information 22b." For example, when the results detected by the camera 12 are "round-shaped" and "140 mm in diameter," the identifying unit 31 identifies the container selected by the shopper as "receptacle b."

### (2-11-2) Product weight calculation unit

The product weight calculation unit 32 first extracts the weight of the container by applying the container name identified by the identifying unit 31 to the container information table 22. Thus, when the container selected by the shopper is "receptacle b," the product weight calculation unit 32 extracts the container weight 22c "9 g."

Next, the product weight calculator 32 subtracts the extracted container weight from the weight value of the object weighed by the weighing unit 11 to calculate the product weight. In other words, because the weight value of the obj ect includes not only the weight of the product, but also the weight of the container holding the product, the product weight calculation unit 32 uses the extracted container weight to find the weight of the product itself. For example, when the weight value of the object for the product in the receptacle b is 600 g, the weight of the product itself is 591 g (600 g - 9 g = 591 g).

In addition, the product weight calculation unit 32 calculates the product price by multiplying the weight of the product itself by the product unit price. The container weight used to calculate the weight of the product itself, the weight of the object or product weight, the product unit price, and the calculated price of the product itself are displayed on screens sc2, sc3, as shown in FIGS. 8, 9, and 12.

### (2-11-3) Weight difference calculation unit

The weight difference calculation unit 33 is used to calculate the weight difference "10 g" in message sc2e in order to display the message sc2e shown in FIG. 12 for indicating how much more of a product must be purchased to lower its unit price on the first touch panel 16a. Specifically, the weight difference calculation unit 33 calculates the weight difference between the current weight of the product the shopper is purchasing and the lower limit value of the weight range in which the product unit price will be lower than that at the current weight. For example, when the current product weight is 350 g, the product unit price will be ¥188 (FIG. 11). Because the lower limit value of the product weight range for which the product unit price is ¥178 is 401 g, the weight difference calculation unit 33 subtracts the current product weight "350 g" from the lower limit value "401 g" to calculate the weight difference "51 g," which is the minimum weight needed to reduce the product unit price.

### (2-11-4) Label information-forming unit

The label information-forming unit 34 forms the information displayed (i.e., to be printed)on the label by the label printer unit 14. In other words, the label information-forming unit 34 forms the expiration date L2, product unit price L3, the net weight L4 constituting the weight of the product itself as calculated by the product weight calculation unit 32, the product price L5, and the barcode L6 representing the price, as in the label L1 shown in FIG. 5.

### (2-11-5) Coupon information-forming unit

The coupon information-forming unit 35 forms the information displayed (i.e., to be printed) on the coupon by the coupon printer unit 15. In other words, the coupon information-forming unit 35 forms the product name C2 for which the coupon offers a discount, the discount amount C3, the coupon expiration date C4, and the barcode C5 indicating the discount price and the like as the coupon details capable of being offered according to the member information read by the camera 12, as in the coupon C1 shown in FIG. 6.

### (2-11-6) Notification control unit

The notification control unit 36 controls the formation, display and audio output of the information provided by the shopper-side notification unit 16. In particular, the notification control unit 36 controls the timing at which the screens sc1 to sc4 are displayed on the first touch panel 16a and the audio output of the speaker 16b according to the results detected by the person sensor 13 and the results detected by the camera 12.

When the camera 12 cannot detect the size of the container, or when the identifying unit 31 cannot identify the container because the size of the container detected by the camera 12 does not correspond to any of the container size-related information 22b in the container information table 22, or corresponds to size-related information 22b for a plurality of containers, the notification control unit 36 displays screen sc4 on the first touch panel 16a.

The notification control unit 36 also controls the formation and display of the information outputted to the second touch panel 17. For example, the notification control unit 36 controls the display of the fact that the remaining amount of the blank paper roll in the label printer unit 14 or the like has reached a predetermined amount or less, or that the number of unused containers has reached a predetermined number or fewer, on the second touch panel 17.

### (2-11-7) Communication control unit

The communication control unit 37 controls the communication of the store-side wireless unit 18 and the communication unit 19.

For example, the communication control unit 37 measures the amount of time from when the person sensor 13 first began detecting the presence of a shopper in the vicinity of the weighing device 100, and, when the measured amount of time that a shopper is continuously present as detected by the person sensor 13 reaches a predetermined amount of time or longer, causes the store-side wireless unit 18 to send a message or page to the portable terminal of the store employee communicating this fact. The communication control unit 37 performs grasping information transmission control and the like on the communication unit 19.

### (3) Series of actions performed by the weighing device

### (3-1) Actions primarily performed for shoppers

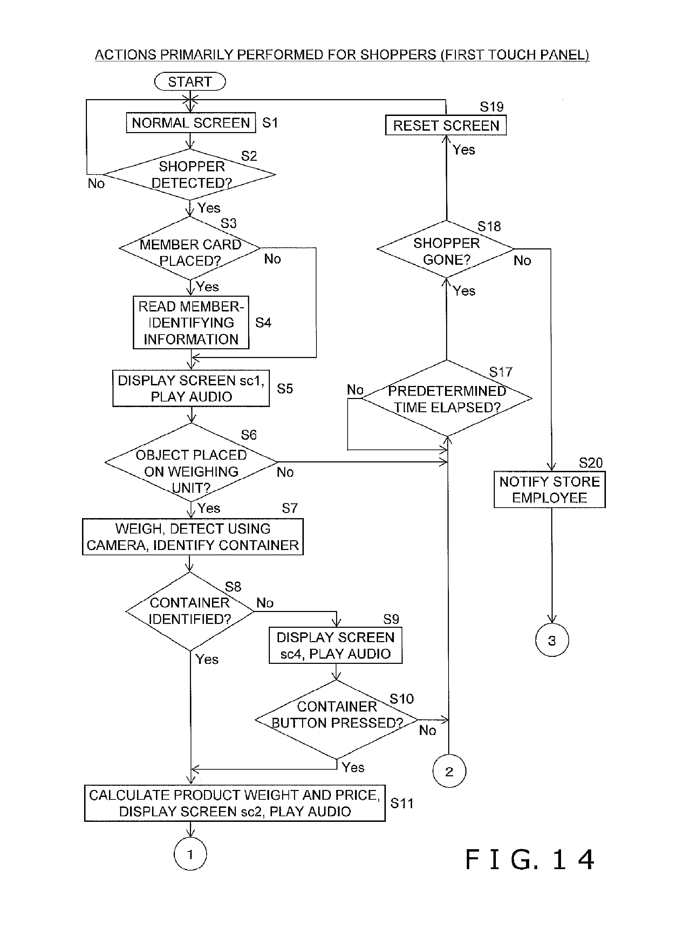

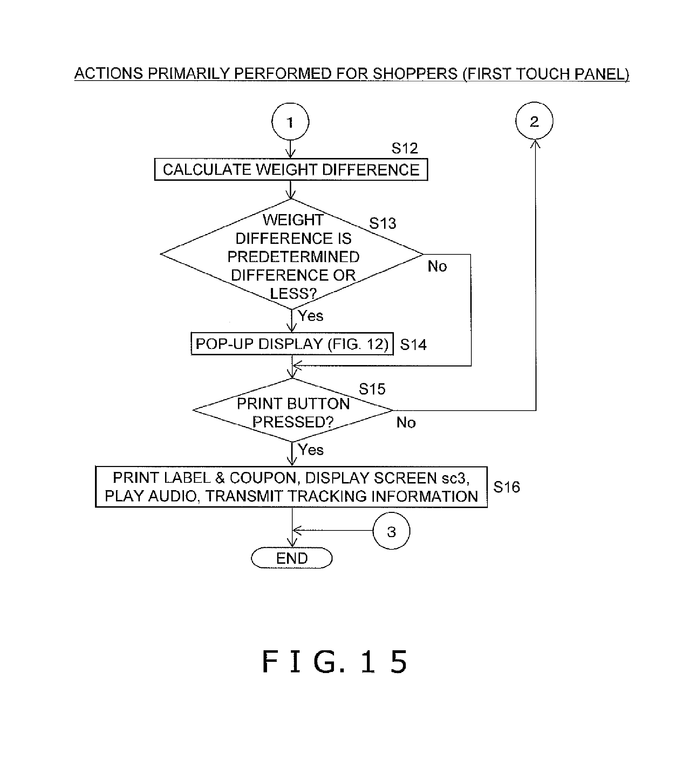

FIGS. 14 and 15 are flow charts showing the order of a series of actions primarily performed for shoppers out of those actions performed by the weighing device 100. In this example, the weighing device 100 is designed to announce product unit prices reductions only when the weight difference is a predetermined difference or less (message sc2e in FIG. 12). The "normal screen" of the first touch panel 16a referred to below is a so-called screen saver display screen, or a promotional video showing store or product images and videos thereof.

Steps S1―S2: With the normal screen being displayed on the first touch panel 16a (S1), when the person sensor 13 detects that a shopper has approached the weighing device 100 (YES in S2), the actions from step S3 on are performed.

Steps S3―S4: When a member card is placed on the weighing unit 11 (YES in S3), the camera 12 reads the barcode on the member card (S4).

Step S5: The first touch panel 16a displays the screen sc1 shown in FIG. 7, and the speaker 16b plays the audio message sc1e prompting the shopper to place an object on the weighing unit 11 (S5).

Steps S6―S7: When an object is placed on the weighing surface of the weighing unit 11 (YES in S6), the weighing unit 11 weighs the object, and the camera 12 detects the size of the container holding the object (S7). The identifying unit 31 identifies the container selected by the shopper on the basis of the container size detected by the camera 12.

Steps S8―S9: When the container cannot be identified in step S7 (NO in S8), the first touch panel 16a displays the screen sc4 shown in FIG. 10, and the speaker 16b plays the audio message sc4a prompting the shopper to select the container used (S9).

Steps S10―S11: When the first touch panel 16a displaying the screen sc4 in step S7 receives a shopper container selection (YES in S10), and the container is successfully identified (YES in S8), the product weight calculation unit 32 calculates the weight of the product itself, and calculates the product price (S11). The first touch panel 16a then displays the screen sc2 shown in FIG. 8, and the speaker 16b plays the audio message sc2a prompting the shopper to press the PRINT button sc2c on the screen sc2.

Steps S12―S14: The weight difference calculation unit 33 calculates the weight difference between the current weight of the product the shopper is purchasing and the lower limit value of the weight range in which the product unit price will be lower than that at the current weight (S12). When the weight differential is a predetermined difference or less (YES in S13), the first touch panel 16a displaying screen sc2 shows the message sc2e shown in FIG. 12 in a pop-up display over the screen sc2, and the speaker 16b plays an audio message telling the shopper how much more product must be purchased to receive a lower product unit price (S14). When the weight differential is a predetermined difference or greater (NO in S 13), step S 14 is omitted.

Steps S15―S16: When the PRINT button sc2c on the screen sc2 is pressed by the shopper (YES in S15), the label printer unit 14 prints a label such as that shown in FIG. 5, and the coupon printer unit 15 prints a coupon such as that shown in FIG. 6 (S16). The first touch panel 16a displays the screen sc3 shown in FIG. 9, and the speaker 16b plays the audio message sc3a prompting the shopper to attach the printed label to the container. The communication unit 19 then sends the grasping information to the server 150 and the register terminals 160a, 160b....

Steps S17-S20: When a predetermined amount of time passes without an object being placed on the weighing unit 11 in step S6 (NO in S6, YES in S17), a predetermined amount of time passes without the shopper selecting a container in step S10 (NO in S10, YES in S 17), or a predetermined amount of time passes without the PRINT button sc2c being pressed in step S15 (NO in S15, YES in S17), and when the person sensor 13 detects that the shopper has left (YES in S18), the screen on the first touch panel 16a is reset (S19), returning to the normal screen (S1). When the person sensor 13 detects that a shopper is present near the weighing device 100 for a predetermined amount of time without leaving in step S18 (No in S18), the store-side wireless unit 18 communicates this information to a portable terminal carried by a store employee (S20).

### (3-2) Other actions

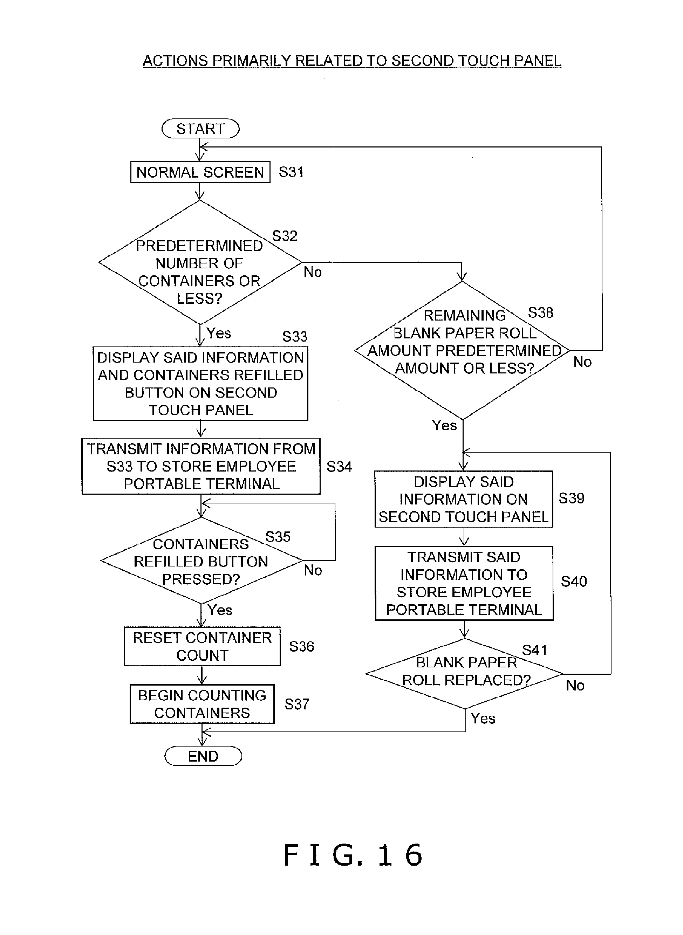

FIG. 16 is a flow chart of actions primarily relating to the second touch panel 17 out of those actions performed by the weighing device 100.

Step S31: Normally, the second touch panel 17 displays a normal screen such as a screen saver.

Steps S32―S34: When the count value for the number of unused containers at a prepared foods corner reaches a predetermined number or less (YES in S32), the second touch panel 17 displays that fact along with a CONTAINERS REFILLED button (S33), and the store-side wireless unit 18 transmits this information to a portable terminal carried by a store employee (S34).

Steps S35-S37: When the unused containers are refilled to the maximum number by a store employee and the CONTAINERS REFILLED button on the second touch panel 17 is pressed (YES in S35), the weighing device 100 resets the container number count (S36) and begins counting the number of containers (S37).

Step S38: When the remaining amount of the blank paper roll in the label printer unit 14 or the coupon printer unit 15 reaches a predetermined level or lower (YES in S38), the second touch panel 17 displays this information (S39), and the store-side wireless unit 18 transmits this information to a portable terminal carried by a store employee (S40). Afterwards, when the depleted blank paper roll is replaced with a new blank paper roll by a store employee (YES in S41), the state of the remaining amount of the blank paper roll being at a predetermined amount or less is released.

### (4) Characteristics

### (4-1)

When a shopper approaches the weighing device 100, the purchasing procedure from when the object is placed to when the shopper attaches the label to the container is displayed on the first touch panel 16a, as shown in screens sc1 to sc4, and audio notification is concurrently provided to the shopper by the speaker 16b. Thus, the shopper will not miss the displays and be confused as to how to operate the device or be inconvenienced by having to operate the device while reading the displays, as with a conventional device. The shopper is also spared the need to memorize the video of the purchasing procedure displayed prior to operation, allowing smooth operation according to the correct procedure.

Moreover, the weighing device 100 automatically identifies the container selected by the shopper using the camera 12 and the like. Thus, apart from instances where the container size cannot be identified or other special circumstances, the shopper is spared the need to select (i.e., directly input) the container used on the weighing device 100. It is thereby possible to prevent the problems of mistaken container selections by shoppers, and difficulty in immediately finding the button for the container being used.

The above features improve convenience for shoppers. In addition, illicit receptacle input by shoppers can be prevented, allowing store losses to be reduced.

### (4-2)

The camera 12 according to the present embodiment not only detects container size, but also functions as a movement detector unit for detecting the act of attaching a label. This allows store staff to confirm whether the act of attaching the label is being properly performed by the shopper on the weighing device 100.

### (4-3)

The weighing device 100 is further provided with a store-side wireless unit 18 for notifying a store employee when the person sensor 13 continuously detects the presence of a shopper for a predetermined amount of time or longer. When the shopper is continuously present in the vicinity of the weighing device 100 for a predetermined amount of time or longer, the shopper can be assumed to be experiencing some sort of difficulty. Having been so notified, the store employee can come to the assistance of the shopper, allowing the shopper to be provided with better service.

### (4-4)

In the weighing device 100, the product unit price is set per product weight range, and the shopper-side notification unit 16 notifies the shopper of the weight difference between the weight calculated for the product and the lower limit value of the weight range when the product unit price is less than the unit price for the corresponding weight using visual and audio representation. Shoppers can thereby find out how much more of a product they need to purchase to be able to purchase the product at a lower unit price than the current one.

### (4-5)

In addition, the weighing device 100 transmits information regarding labels and the results detected by the camera 12 (specifically, the act of attaching the label photographed by the camera 12) to the server 150 and the register terminals 160a, 160b, ... as grasping information for grasping the incidence of illicit shopper actions. This allows the store to grasp how frequently illicit actions are being performed, enabling strategies to prevent such actions to be developed.

### Second embodiment

In the first embodiment described above, the purchasing procedure is announced to a shopper using visual and audio representation primarily when the shopper approaches the weighing device 100, and the container selected by the shopper is automatically recognized. A weighing device 200 described hereafter does not perform automatic container recognition, but instead notifies the shopper of a left-behind label (i.e. notifies the shopper that the shopper has been forgot to take a label) using visual and audio representation.

The external appearance of the weighing device 200 is similar to that of the first embodiment described above. As in the case of the first embodiment, the weighing device 200 is connected to a server 150 and register terminals 160a, 160b, ..., and transmits grasping information to the server 150 and the register terminals 160a, 160b, ....

### (1) Configuration

The configuration of the weighing device 200 differs from that of the weighing device 100 according to the first embodiment in that it is not provided with the camera 12, identifying unit 31 related to the actions of the camera 12, coupon printer unit 15, and coupon information-forming unit 35 of the first embodiment shown in FIG. 4.

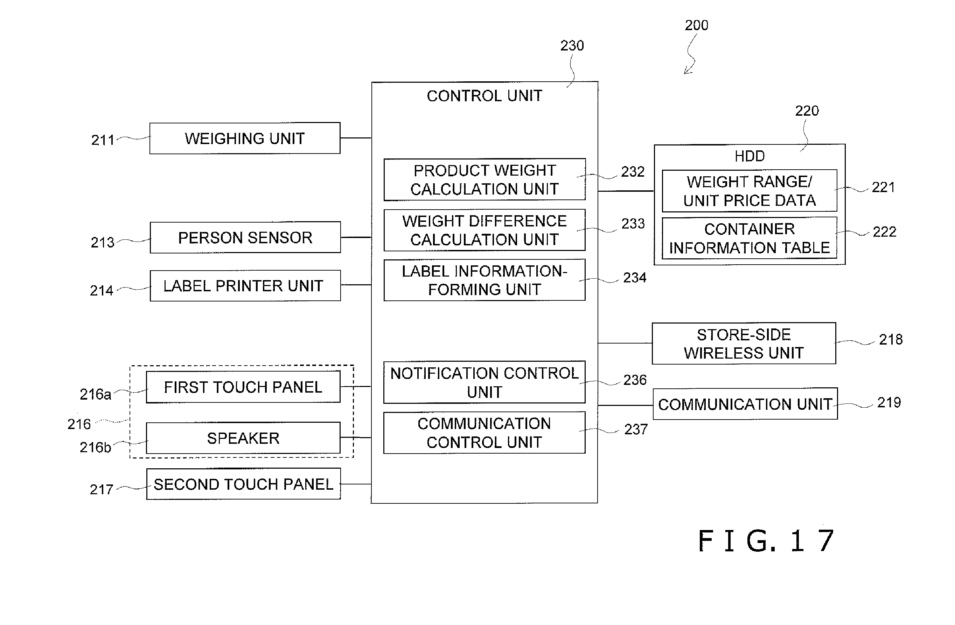

Specifically, as shown in FIG. 17, the weighing device 200 primarily has a weighing unit 211 (equivalent to a movement detector unit), a person sensor 213 (equivalent to a person detector unit), a label printer unit 214 (equivalent to a printer unit), a shopper-side notification unit 216 comprising a first touch panel 216a and a speaker 216b, a second touch panel 217, a store-side wireless unit 218, a communication unit 219, an HDD 220, and a control unit 230. The HDD 220 primarily stores weight range/unit price data 221 and a container information table 222. The control unit 230 functions as a product weight calculation unit 232 (equivalent to a calculation unit), a weight difference calculation unit 233, a label information-forming unit 234, a notification control unit 236, and a communication control unit 237.

The person sensor 213, label printer unit 214, second touch panel 217, store-side wireless unit 218, communication unit 219, weight range/unit price data 221, weight difference calculation unit 233, label information-forming unit 234, and communication control unit 237 are similar to the person sensor 13, label printer unit 14, second touch panel 17, store-side wireless unit 18, communication unit 19, weight range/unit price data 21, weight difference calculation unit 33, label information-forming unit 34, and communication control unit 37 described in the first embodiment. Therefore, descriptions of these components will be omitted, and the weighing unit 211, shopper-side notification unit 216, container information table 222, product weight calculation unit 232, and notification control unit 236 according to the second embodiment will be described below.

### (1-1) Weighing unit

As in the first embodiment, the weighing unit 211 weighs the object.

Moreover, the weighing unit 211 according to the present embodiment detects whether the label is being attached with the object having been removed from the weighing device 200 on the basis of the weight of the object. More specifically, when an object is resting on the weighing unit 211, the weighing unit 211 detects the object on the weighing device 200 via the weight of the object. Conversely, when the object is removed from the weighing unit 211, the weighing unit 211 cannot detect the weight of the object, and displays measured results of "0 g." Thus, the weighing unit 211 also detects whether the object has been removed from the weighing device 200 on the basis of whether or not the weight of the object is "0 g" when the label is being attached.

Thus, the grasping information in the present embodiment also includes weighing unit 211 detection results along with the information pertaining to the label (i.e., the information regarding the label) according to the first embodiment. Therefore, when the grasping information indicates that the results detected by the weighing unit 211 while the label is being attached are "0 g," it is possible to grasp that a shopper may be maliciously attempting to engage in the illicit practice of attaching a label with a low price to a container with a high price.

### (1-2) Shopper-side notification unit

### (1-2-1) First touch panel

When the person sensor 213 detects the presence of a shopper approaching the weighing device 200, the first touch panel 216a begins displaying screen sc1 (FIG. 7), which is one of the screens for purchasing procedure guidance. In particular, because automatic container recognition is not performed in the present embodiment, as already discussed, when an object is placed on the weighing unit 211 while the screen sc1 is being displayed, the first touch panel 216a next displays the screen sc4 shown in FIG. 10, prompting the shopper to select (i.e. directly input) a container. After a container has been selected on the screen sc4, the first touch panel 216a next displays the screen sc2 shown in FIG. 8. After the shopper presses the PRINT button sc2c on screen sc2, the first touch panel 216a next displays the screen sc3 shown in FIG. 9.

When a predetermined amount of time passes after the screens sc1 to sc4 are displayed, and a shopper is not in the vicinity of the weighing device 200, it is determined that the shopper have canceled the purchasing procedure before finishing, and the first touch panel 216a finishes displaying the screens sc1 to sc4, even when in the middle of showing purchasing procedure guidance.

The first touch panel 216a is also capable, as in the case of the first embodiment, of further displaying a message sc2e while the screen sc2 is being displayed indicating how much more product must be purchased to lower the unit price, as shown in FIG. 12.

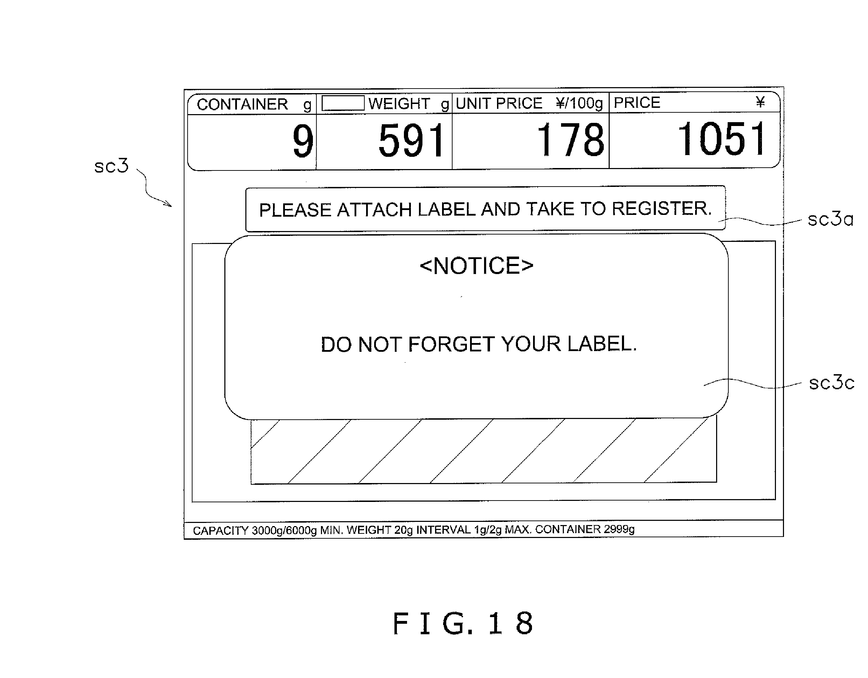

During the printing of a label by the label printer unit 214, when the person sensor 213 detects that the shopper has left the vicinity of the weighing device 200 and the label is still in the label printer unit 214, the first touch panel 216a according to the present embodiment displays a message sc3c indicating that the label has been accidentally left behind (i.e., the shopper has been forgot to take a label), as shown in FIG. 18.

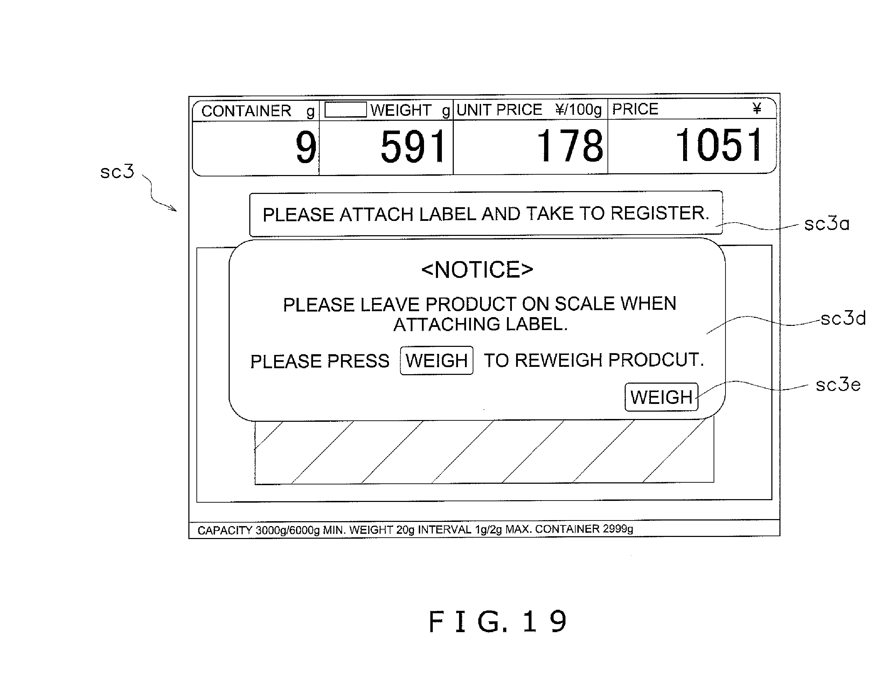

When the weighing unit 211 detects that the label is being attached with the object having been removed from the weighing device 200, the first touch panel 216a according to the present embodiment displays a message sc3d to the shopper indicating to reweigh the object as shown in FIG. 19. FIG. 19 shows an example of a screen displaying the message sc3d, which is displayed when the object is removed from the weighing unit 211 while the screen sc3 prompting the shopper to attach the label is being displayed on the first touch panel 216a, along with a REWEIGH button sc3e. When the shopper presses the REWEIGH button sc3e, the object is reweighed.

### (1-2-2) Speaker

As in the case of the first embodiment, the speaker 216b provides shoppers with various types of information via audio output. When the person sensor 213 detects the presence of a shopper approaching the weighing device 200, the speaker 216b plays audio for messages sc1e, sc4a, sc2a, and sc3a on the displayed screens sc1, sc4, sc2, sc3 according to the screens sc1 to sc4 displayed on the first touch panel 216a. When message sc2e shown in FIG. 12 is shown in a pop-up display on the first touch panel 216a, the speaker 216b further plays message sc2e in tandem with the pop-up display.

The speaker 216b according to the present embodiment also delivers the message sc3c via audio output at the same time that the message sc3c notifying the shopper of a left-behind label (i.e., the message sc3c notifying that the shopper forget to take the label) is being displayed on the first touch panel 216a as shown in FIG. 18.

The speaker 216b according to the present embodiment also delivers the message sc3d via audio output at the same time that the message sc3d indicating to reweigh the object is displayed on the first touch panel 216a, as shown in FIG. 19.

### (1-3) Container information table

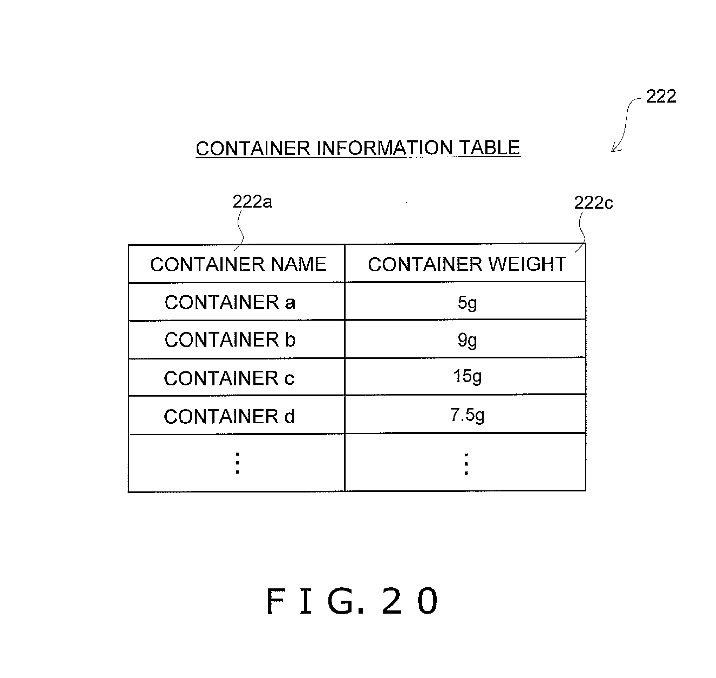

The weighing device 200 according to the present embodiment does not perform automatic container recognition, as previously discussed. Thus, the container information table 222 only associates a container name 222a and a container weight 222c, as shown in FIG. 20, and container size-related information is not associated.

### (1-4) Product weight calculation

The product weight calculation 232 first applies the information for the container selected (i.e., directly input) by the shopper to the container information table 222, extracting the container weight. Next, the product weight calculation unit 232 subtracts the extracted container weight from the weight value of the object weighed by the weighing unit 211 to calculate the product weight. In addition, the product weight calculation unit 232 calculates the product price by multiplying the weight of the product itself by the product unit price.

In other words, the product weight calculation unit 232 according to the present embodiment differs from the product weight calculation unit 32 according to the first embodiment only in that the former does not use automatically identified container information, but rather uses shopper-selected container information to calculate product weight.

### (1-5) Notification control unit

The notification control unit 236 controls the formation, display, audio output of the information provided by the shopper-side notification unit 216. In particular, the notification control unit 236 controls the timing at which the screens sc1 to sc4 are displayed on the first touch panel 216a and the audio output of the speaker 216b according to the results detected by the person sensor 213. Specifically, the notification control unit 236 controls display timing and audio output so that the actions of the first touch panel 216a and the speaker 236b are realized.

As in the case of the notification control unit 36 according to the first embodiment, the notification control unit 236 also controls the formation and display of the information outputted to the second touch panel 217.

### (2) Series of actions performed by the weighing device

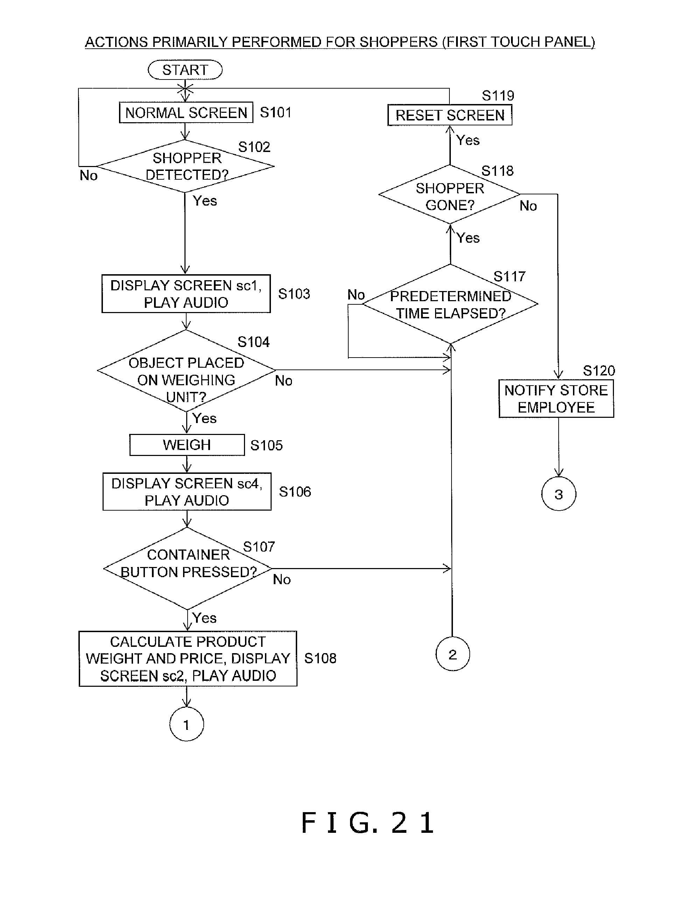

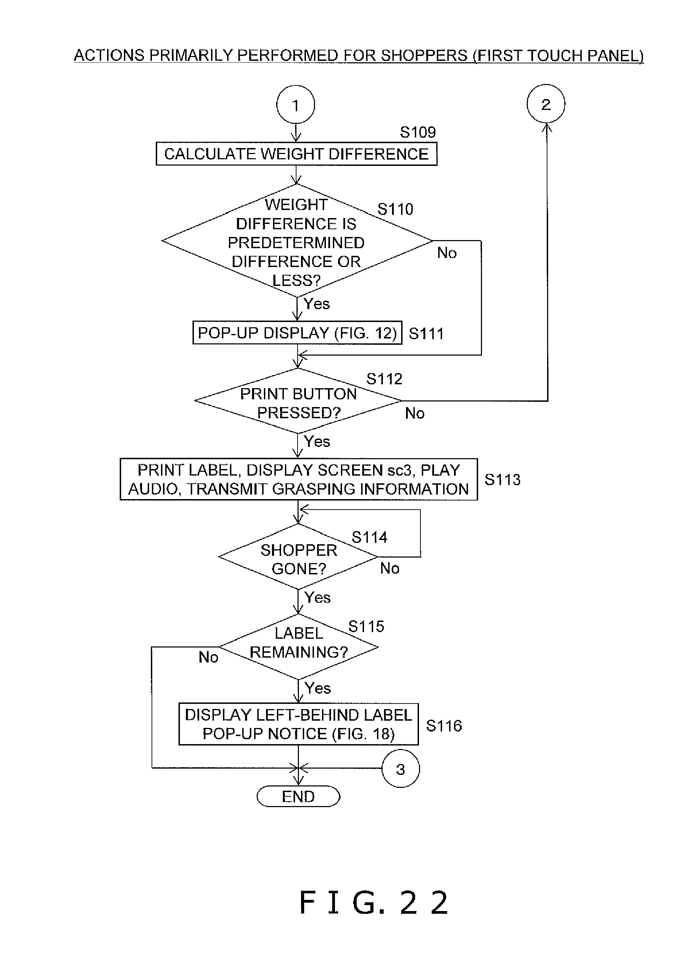

FIGS. 21 and 22 are flow charts showing the order of a series of actions primarily performed for shoppers out of those actions performed by the weighing device 200. Apart from part of the "actions primarily performed for shoppers" differing from that of the weighing device 100 according to the first embodiment, the weighing device 200 according to the present embodiment is similar to the weighing device 100 according to the first embodiment with respect to the other actions. Therefore, only the "actions primarily performed for shoppers" will be described below.

Steps S101-S103: With the normal screen being displayed on the first touch panel 216a (S101), when the person sensor 213 detects that a shopper has approached the weighing device 200 (YES in S102), the first touch panel 216a displays the screen sc1 shown in FIG. 7, and the speaker 216b plays the audio message sc1e prompting the shopper to place an object on the weighing unit 211 (S103).

Steps S104―S106: When an object is placed on the weighing surface of the weighing unit 211 (Yes in S104), the weighing unit 211 weighs the object (S105). The first touch panel 216a displays the screen sc4 shown in FIG. 10, and the speaker 216b plays the audio message sc4a prompting the shopper to select the container used (S 106).

Steps S107-S108: When the first touch panel 216a receives a shopper container selection (YES in S107), the product weight calculation unit 232 calculates the weight of the product itself, and calculates the product price (S108). The first touch panel 216a then displays the screen sc2 shown in FIG. 8, and the speaker 216b plays the audio message sc2a prompting the shopper to press the PRINT button sc2c on the screen sc2.

Steps S109―S111: The weight difference calculation unit 233 calculates the weight difference between the current weight of the product the shopper is purchasing and the lower limit value of the weight range in which the product unit price will be lower than that at the current weight (S109). When the weight differential is a predetermined difference or less (YES in S110), the first touch panel 216a displaying screen sc2 shows the message sc2e shown in FIG. 12 in a pop-up display over the screen sc2, and the speaker 216b plays an audio message telling the shopper how much more product must be purchased to receive a lower product unit price (S111). When the weight differential is a predetermined difference or greater (NO in S110), step S111 is omitted.

Steps S112-S113: When the PRINT button sc2c on the screen sc2 is pressed by the shopper (YES in S112), the label printer unit 214 prints a label such as that shown in FIG. 5 (S113). The first touch panel 216a displays the screen sc3 shown in FIG. 9, and the speaker 216b plays the audio message sc3a prompting the shopper to attach the printed label to the container.

At this point, when the weighing unit 211 detects that the label is being attached with the object having been removed from the weighing unit 211, the first touch panel 216a displays the message sc3d and the REWEIGH button sc3e shown in FIG. 19, and the speaker 216b plays the message sc3d via audio output. When the REWEIGH button sc3e is pressed, the weighing unit 211 reweighs the object, and the label printer unit 214 reprints the label. The communication unit 219 then sends the grasping information to the server 150 and the register terminals 160a, 160b, ....

Steps S114―S116: When the person sensor 213 detects that the shopper has left the vicinity of the weighing device 200 (YES in S114), and the label printed by the label printer unit 214 still has not been taken (YES in S 115), the first touch panel 216a displays the message sc3c indicating that the printed label has been accidentally left behind (i.e., the message sc3c notifying that the shopper forget to take the label), and the speaker 216b plays the audio message sc3c (S116).

Steps S117―S120: When a predetermined amount of time passes without an object being placed on the weighing unit 211 in step S104 (NO in S104, YES in S 117), a predetermined amount of time passes without the shopper selecting a container in step S107 (NO in S107, YES in S 117), or a predetermined amount of time passes without the PRINT button sc2c being pressed in step S 112 (NO in S 112, YES in S 117), and when the person sensor 213 detects that the shopper has left (YES in S 118), the screen on the first touch panel 216a is reset (S 119), returning to the normal screen (S101). When the person sensor 213 detects that a shopper is present near the weighing device 200 for a predetermined amount of time without leaving in step S 118 (NO in S 118), the store wireless unit 218 communicates this information to a portable terminal carried by a store employee (S120).

### (3) Characteristics

### (3-1)

According to the weighing device 200, as in the case of the first embodiment, shoppers are notified of the purchase procedure by visual and audio representation, enabling shoppers to operate the device according to the correct procedure.

Furthermore, according to the weighing device 200, when the label is still in the label printer unit 214 when the person sensor 213 detects that the shopper is no longer in the vicinity of the weighing device 200, the first touch panel 216a displays a message sc3c (FIG. 18) indicating that the label has been accidentally left behind (i.e., the message sc3c notifying that the shopper forget to take the label), and the speaker 216b plays the message sc3c as audio output. This makes it possible to keep labels from being accidentally left behind. That is, it is possible to prevent that shopper has been accidentally forgot to take the label.

The above features improve convenience for the shopper.

### (3-2)

The weighing unit 211 also detects whether the label is being attached with the object having been removed from the weighing device 200 on the basis of the weight of the object. This allows store staff to confirm whether the act of attaching the label is being properly performed by the shopper on the weighing device 200.

Furthermore, when the weighing unit 211 detects that the label is being attached with the object having been removed from the weighing device 200, the first touch panel 216a displays a message sc3d to the shopper indicating to reweigh the object, and the speaker 216b plays the message sc3d (FIG. 19) via audio output. That is, the shopper-side notification unit 216 notifies the shopper a guidance of re-weighing the object. Shoppers are thereby prevented from maliciously performing illicit behavior. This is because the weighing device 200 instructs the shopper to reweigh the object even when, for example, the shopper maliciously attempts to attach a label with a low price to a container with a high price.

### Third embodiment

In the present embodiment, a weighing device 300 combining the unique functions of the weighing device 100 according to the first embodiment and the unique functions of the weighing device 200 according to the second embodiment will be described. The weighing device 300 primarily performs the actions of announcing the purchasing procedure when a shopper approaches the weighing device 300, automatically recognizing the container, notifying shoppers of left-behind labels (i.e. notifying that the shopper has been forgot to take a label), detecting the label being attached using a weighing unit 311 and a camera 312, and instructing the shopper to reweigh the object. In other words, the present embodiment is capable of detecting the object being removed from the weighing device 300 not only using the weighing unit 311, but also by photographing with the camera 312.

The external appearance of the weighing device 300 is similar to that of the first embodiment described above. As in the case of the first embodiment, the weighing device 300 is connected to a server 150 and register terminals 160a, 160b, ..., and transmits grasping information to the server 150 and the register terminals 160a, 160b, ....

### (1) Configuration

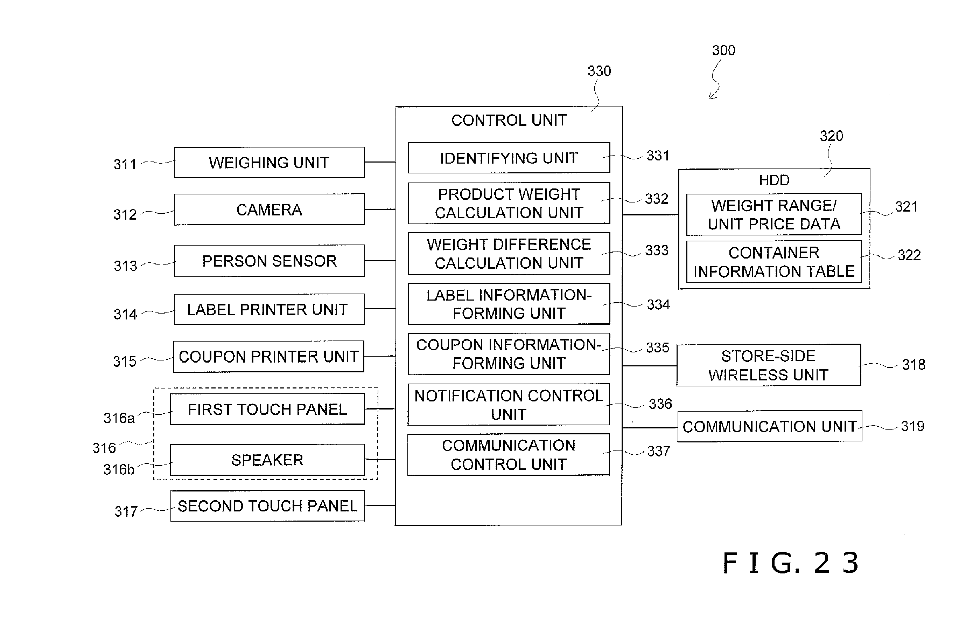

The configuration of the weighing device 300 primarily has the weighing unit 311, the camera 312 (the weighing unit 311 and camera 312 being equivalent to a movement detector unit, and the camera 312 being equivalent to a container detector unit), a person sensor 313 (equivalent to a person detector unit), a label printer unit 314 (equivalent to a printer unit), a coupon printer unit 315, a shopper-side notification unit 316 comprising a first touch panel 316a and a speaker 316b, a second touch panel 317, a store-side wireless unit 318, a communication unit 319, a HDD 320, and a control unit 330, as shown in FIG. 23. The HDD 320 primarily stores weight range/unit price data 321 and a container information table 322. The control unit 330 functions as an identifying unit 331, a product weight calculation unit 332 (equivalent to a calculation unit), a weight difference calculation unit 333, a label information-forming unit 334, a coupon information-forming unit 335, a notification control unit 336, and a communication control unit 337.

The camera 312, person sensor 313, label printer unit 314, coupon printer unit 315, second touch panel 317, store-side wireless unit 318, communication unit 319, weight range/unit price data 321, container information table 322, identifying unit 331, product weight calculation unit 332, weight difference calculation unit 333, label information-forming unit 334, coupon information-forming unit 335, and communication control unit 237 are similar to the camera 12, person sensor 13, label printer unit 14, coupon printer unit 15, second touch panel 17, store-side wireless unit 18, communication unit 19, weight range/unit price data 21, container information table 22, identifying unit 31, product weight calculation unit 32, weight difference calculation unit 33, label information-forming unit 34, coupon information-forming unit 35, and communication control unit 37 described in the first embodiment. The weighing unit 311 is similar to the weighing unit 211 described in the second embodiment. Therefore, descriptions of these components will be omitted, and the shopper-side notification unit 316 and notification control unit 336 according to the present embodiment will be described below.

### (1-1) Shopper-side notification unit

### (1-1-1) First touch panel

As in the case of the first embodiment, when the person sensor 313 detects that a shopper has approached the weighing device 300, the first touch panel 316a displays purchasing procedure guidance screens in the order of screen sc1 (FIG. 7) for prompting the shopper to place an object on the weighing unit 311, a screen sc2 (FIG. 8) for printing a label, and a screen sc3 (FIG. 9) prompting the shopper to attach the label. When the container cannot be automatically identified, the first touch panel 316a displays a screen sc4 (FIG. 10) for prompting the shopper to select (i.e., directly input) the container used after the screen sc1. After a container has been selected on the screen sc4, the first touch panel 316a next displays the screen sc2 (FIG. 8) and screen sc3 (FIG. 9) in that order. When a predetermined amount of time passes after the screens sc1 to sc4 are displayed, and a shopper is not in the vicinity of the weighing device 300, the first touch panel 316a finishes displaying the screens sc1 to sc4.

The first touch panel 316a is also capable, as in the case of the first and second embodiments, of further displaying a message sc2e (FIG. 12) while the screen sc2 is being displayed indicating how much more product must be purchased to lower the unit price.

As in the case of the second embodiment, when the person sensor 313 detects that the shopper has left the vicinity of the weighing device 300 and the label is still in the label printer unit 314, the first touch panel 316a according to the present embodiment displays a message sc3c (FIG. 18) indicating that the label has been accidentally left behind (i.e., the message sc3c notifying that the shopper forget to take the label).

As in the case of the second embodiment, when the weighing unit 311 detects that the label is being attached with the object having been removed from the weighing device 300, the first touch panel 316a according to the present embodiment displays a message sc3d (FIG. 19) to the shopper indicating to reweigh the object, as well as a REWEIGH button sc3e. When the shopper presses the REWEIGH button sc3e, the object is reweighed.

In the present embodiment, the act of attaching the label is detected by both the weighing unit 311 and the camera 312. In other words, the weighing performed by the weighing unit 311 is used to determine whether the label is being attached with the object having been removed from the weighing unit 311, and the camera 312 also photographs the act of attaching the label on the weighing unit 311.

### (1-1-2) Speaker

As in the case of the first and second embodiments, the speaker 316b provides shoppers with various types of information via audio output. When the person sensor 313 detects the presence of a shopper approaching the weighing device 300, the speaker 316b plays audio for messages sc1e, sc2a, sc3a, and sc4a on the displayed screens sc1 to sc4 according to the screens sc1 to sc4 displayed on the first touch panel 316a. When message sc2e shown in FIG. 12 is shown in a pop-up display on the first touch panel 316a, the speaker 316b further plays message sc2e in tandem with the pop-up display.

As in the case of the second embodiment, the speaker 316b also outputs the message sc3c as audio at the same as the first touch panel 316a displays the message sc3c in FIG. 18 notifying the shopper that the label has been accidentally left behind (i.e., the message sc3c notifying that the shopper forget to take the label), and outputs the message sc3d as audio at the same time as the message sc3d in FIG. 19 instructing the shopper to reweigh the obj ect is displayed.

### (1-2) Notification control unit

The notification control unit 336 controls the formation and display of the information provided by the shopper notification unit 316, and controls audio output. In particular, the notification control unit 336 controls the timing at which the screens sc1 to sc4 are displayed on the first touch panel 316a and the audio output of the speaker 316b according to the results detected by the person sensor 313. Specifically, the notification control unit 336 controls display timing and audio output so that the actions of the first touch panel 316a and the speaker 316b are realized.

As in the case of the notification control unit 36 according to the first embodiment, the notification control unit 336 also controls the formation and display of the information outputted to the second touch panel 317.

### (2) Operation

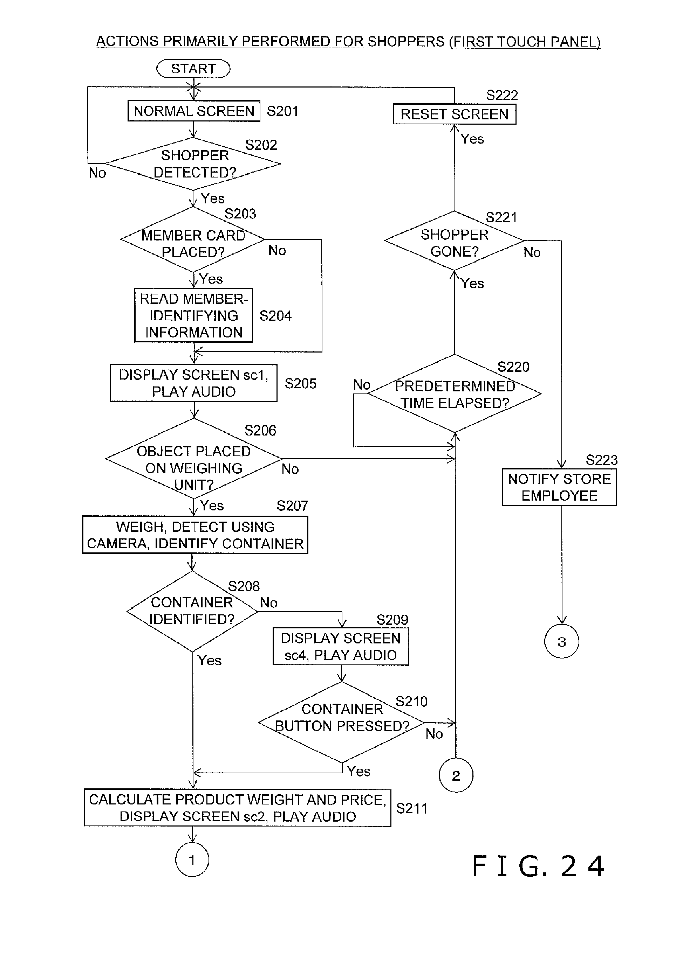

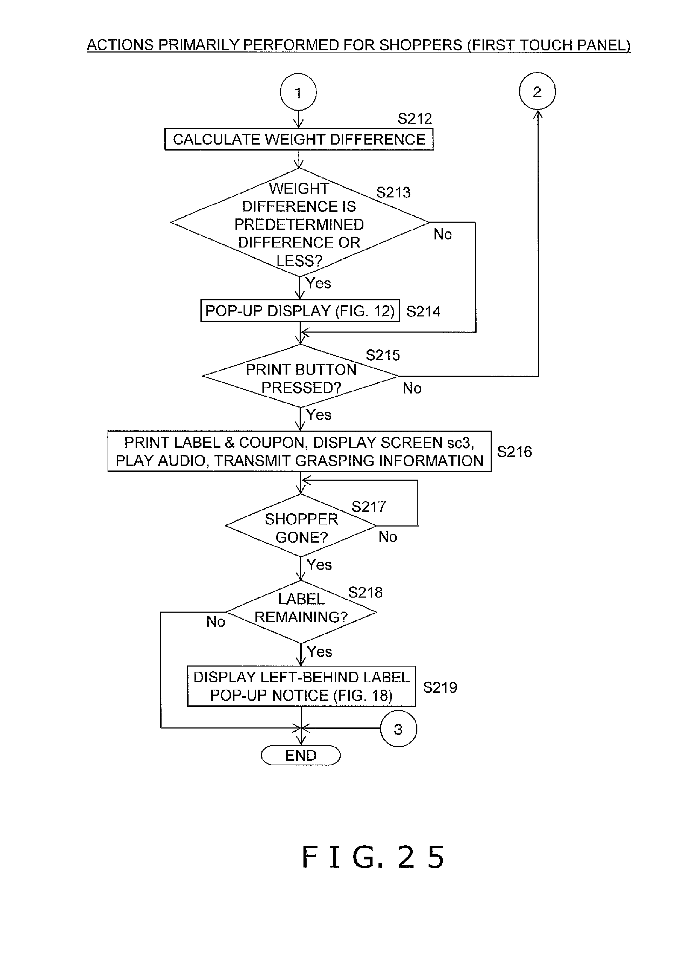

FIGS. 24 and 25 are flow charts showing the order of a series of actions primarily performed for shoppers out of those actions performed by the weighing device 300. In FIGS. 24 and 25, the actions of notifying the shopper of a left-behind label (S 114 to S 116 in FIGS. 21 and 22) and instructing the shopper to perform reweighing (S113) performed by the weighing device 200 according to the second embodiment are added to the actions primarily performed for shoppers by the weighing device 100 according to the first embodiment (S1 to S20 in FIGS. 14 and 15). Specifically, actions S201 to S215 and S220 to S223 in FIGS. 24 and 25 are similar to actions S1 to S15 and S17 to S20 in FIGS. 14 and 15. Actions S217 to S219 in FIGS. 24 and 25 are similar to actions S114 to S116 in FIGS. 21 and 22. Action S216 in FIGS. 24 and 25 is a combination of S 16 in FIG. 15 and S 13 in FIG. 22.

The weighing device 300 also performs the "other actions" from the first embodiment shown in FIG. 16.

### (3) Effects

### (3-1)

According to the weighing device 300, shoppers are notified of the purchase procedure by visual and audio representation, enabling shoppers to operate the device according to the correct procedure.

Moreover, because the type of container selected by the shopper is automatically recognized, apart from instances where the container size cannot be identified or other special circumstances, the shopper is spared the need to select (i.e., directly input) the container used on the weighing device 300.

Moreover, when a label is still in the label printer unit 314 despite the shopper no longer being in the vicinity of the weighing device 300, the shopper is notified using visual and audio representation that the label has been accidentally left behind (FIG. 18), also making it possible to prevent labels from accidentally being left behind. That is, it is possible to prevent that shopper has been accidentally forgot to take the label.

The above features improve convenience for the shopper. In addition, illicit receptacle selection by shoppers can be prevented, allowing store losses to be reduced.

### (3-2)

The weighing unit 311 also detects whether the label is being attached with the object having been removed from the weighing device 300 on the basis of the weight of the object. This allows store staff to confirm whether the act of attaching the label is being properly performed by the shopper on the weighing device 300.

When the weighing unit 311 detects that the label is being attached after the object has been taken off the weighing device 300, the shopper is instructed to reweigh the object using visual and audio representation (FIG. 19). That is, the shopper-side notification unit 316 notifies the shopper a guidance of reweighing the object. Shoppers are thereby prevented from engaging in the illicit behavior of, for example, maliciously applying a label having a low price to a container having a high price.

Furthermore, in the present embodiment, because the act of attaching the label is detected by the weighing unit 311 and the camera 312, the store is able to determine with greater precision whether attachment of the label is being properly performed on the weighing device 300 or whether illicit actions are being performed.

### Modifications

Embodiments of the present invention have been described above, but the present invention is not limited to these embodiments, and various modifications are possible to the extent that they remain within the spirit of the invention. For instance, modifications such as the following are possible.

### (1) Modification A

In the first embodiment described above, the camera 12 is described as detecting the act of attaching the label. However, the detection of the act of attaching the label in the first embodiment may be performed by the weighing unit 11, as in the case of the second embodiment, or by the camera 12 and weighing unit 11, as in the case of the third embodiment.

In the third embodiment, the weighing unit 311 and camera 312 are described as detecting the act of attaching the label, but the detection may also be performed by one of the weighing unit 311 or the camera 312.

### (2) Modification B

In the first, second, and third embodiments described above, the weighing device 100, 200, 300 are described as being communicably connected to both the server 150 and the register terminals 160a, 160b, .... However, the weighing device 100, 200, 300 may also be communicably connected to one of the server 150 or the register terminals 160a, 160b, .... In such cases, the grasping information is transmitted to either the server 150 or the register terminals 160a, 160b, ... so communicably connected.

### (3) Modification C

In the first, second, and third embodiments described above, the weighing device 100, 200, 300 is configured to announce (display the message sc2e shown in FIG. 12) product unit price reductions only when the weight difference is a predetermined difference or less. However, this configuration is not essential to the weighing device according to the present invention. Therefore, the weighing device need not announce product unit price reductions.

It is also acceptable to announce how much more product must be purchased to receive a product unit price reduction every time an object is weighed, rather than only when the weight difference is a predetermined difference or less.

The weighing device may also announce how much more product must be purchased for the product unit price to be reduced according to a plurality of patterns, rather than only one pattern.

### (4) Modification D

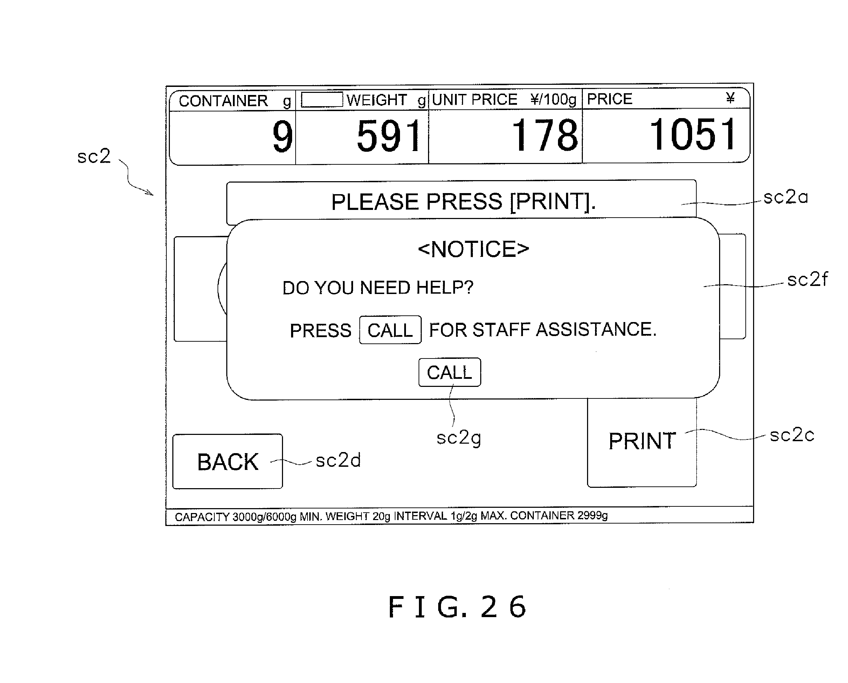

In the description of the first, second and third embodiments above, the store-side wireless units 18, 218, 318 automatically send a notification to a portable terminal carried by a store employee when a shopper is in the vicinity of the weighing device 100, 200, 300 for a predetermined amount of time or longer, allowing the store employee to come to the assistance of the shopper. However, it is also acceptable, instead of automatically sending notification when the shopper has been present for a predetermined amount of time or longer, for a CALL button sc2g to be displayed on the first touch panels 16a, 216a, 316a after a predetermined amount of time has passed, as shown in FIG. 26, and for the store-side wireless units 18, 218, 318 to send notification to the portable terminal carried by the store employee that the shopper has been in the vicinity of the weighing device 100, 200, 300 for a predetermined amount of time or longer when the CALL button sc2g is pressed by the shopper. It is also acceptable, in addition to the display of the CALL button sc2g, for the speakers 16b, 216b, 316b to indicate via audio output that a store employee has been rushed. FIG. 26 shows an example of a screen displaying a CALL button sc2g and a pop-up display of a message sc2f indicating that a store employee will be rushed by pressing the CALL button sc2g.

The CALL button sc2g may also be selectably displayed on the first touch panels 16a, 216a, 316a at all times even if a predetermined amount of time or longer has not passed.

### (5) Modification E

In the above first and third embodiments, the weighing devices 100, 300 is described as printing the coupons. However, the printing of the coupon may also be performed at the register terminals 160a, 160b, .... In such cases, the coupon is given to the shopper that actually pays the bill.

The member card may also be read by a scanning device other than the camera 12, 312 when the coupon is printed.

### (6) Modification F

In the first, second, and third embodiments described above, the first and second touch panels 16a, 17, 216a, 217, 316a, 317 are disposed above the weighing units 11, 211, 311, as shown in FIGS. 1, 2, and the like. However, the first and second touch panels are not limited to the positions shown in FIGS. 1 and 2, but may be disposed in any position.

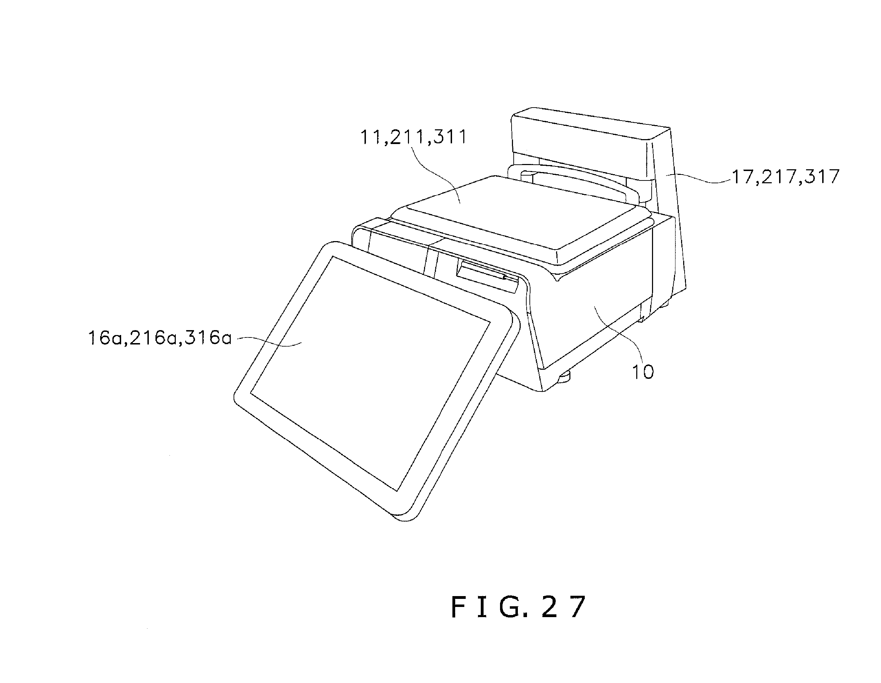

FIG. 27 shows an example of another disposition of the first and second touch panels 16a, 17, 216a, 217, 316a, 317. FIG. 27 shows an instance in which the first and second touch panels 16a, 17, 216a, 217, 316a, 317 are disposed on the side of the main unit 10.

### (7) Modification G

In the first, second, and third embodiments, the normal screen of the first touch panels 16a, 216a, 316a is described as being, for example, a screen saver or promotional video. However, the normal screen can also be information about product sale dates (specifically, what products go on sale on which days at the store, or the like), or various messages such as "THANK YOU." In such cases, the sale date information or messages may be edited by the store as desired. It is thus possible to encourage buyers (i.e. shopper) to buy by displaying, for example, sale dates on the first touch panels 16a, 216a, 316a.

In cases where such a normal screen is displayed, it is also possible for there to be concurrent audio output from the speaker 16b, 216b, 316b, rather than only a screen display.

### (8) Modification H

In the first, second, and third embodiments described above, it is acceptable for the speakers 16b, 216b, 316b not only to output audio prompting the shopper to print the label when the screen sc2 is displayed on the first touch panels 16a, 216a, 316a, but also to output the product price. This makes it possible to encourage other shoppers to buy as well.

### (9) Modification I

In the first, second, and third embodiments described above, when a plurality of messages to be played via audio are displayed on the screen displayed on the first touch panels 16a, 216a, 316a, the speakers 16b, 216b, 316b may play the messages in order from the top of the screen.

It is also possible to repeat a message that has been played once by the speakers 16b, 216b, 316b after a fixed amount of time has passed.

### (10) Modification J

In the first, second, and third embodiments described above, the weighing device 100, 200, 300 may be configured so that messages to be conveyed to shoppers may be recorded as a store desired. It is thereby possible for the store to convey messages to shoppers via the speakers 16b, 216b, 316b of the weighing device 100, 200, 300.

### (11) Modification K

In the descriptions of the first, second, and third embodiments above, a plurality of products have the same unit price. However, the products may have different unit prices. In such cases, the first touch panels 16a, 216a, 316a display a screen for the shopper to directly input the product into the weighing device 100, 200, 300 before the screen sc2 prompting to print the label.

### (12) Modification L

In the descriptions of the first, second, and third embodiments above, there are two touch panels (first touch panel 16a and second touch panel 17), as shown in FIG. 1 and the like. However, while the first touch panels 16a, 216a, 316a facing the shopper are essential to the weighing device according to the present invention, the second touch panels 17, 217, 317 facing store staff are not essential; thus, the second touch panels 17, 217, 317 may be omitted.

### (13) Modification M

In the description of the first, second, and third embodiments above, the person sensor 12, 212, 312 detect whether or not the shopper is present in the vicinity of the weighing device 100, 200, 300. However, the detection whether or not the shopper is present in the vicinity of the weighing device 100, 200, 300, may be detected by photographing using the camera rather than by person sensor 12, 212, 312.

### (14) Modification N

In the descriptions of the first, second, and third embodiments above, the label is printed by a shopper pressing the PRINT button sc2c. However, the label may also be automatically printed when the product price is calculated, without the PRINT button sc2c being pressed. In such cases, the shopper need only attach the printed label to the container after placing the object on the weighing unit 11, 211, 311.

### (15) Modification O

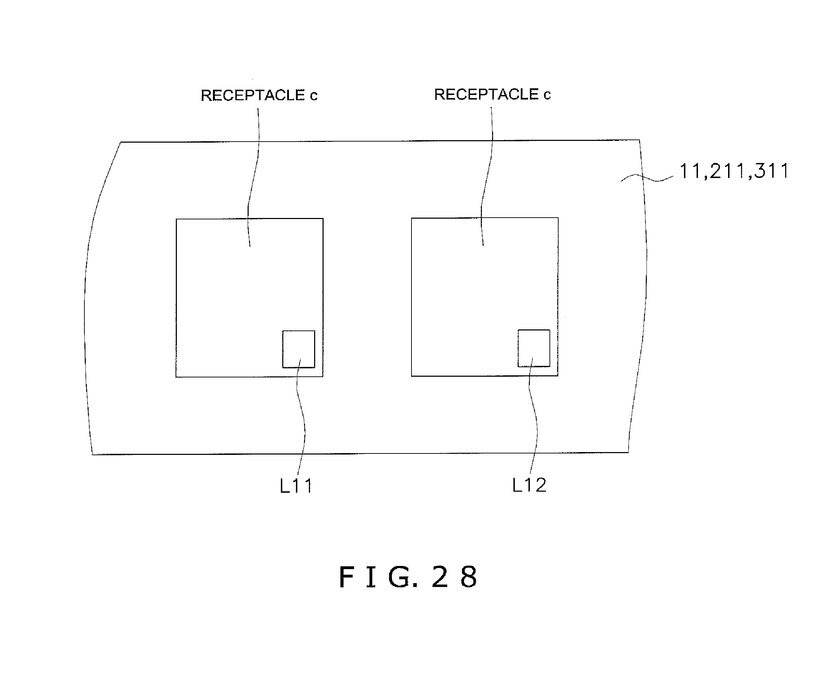

The weighing device 100, 200, 300 according to the first, second, and third embodiments is also capable of handling instances when a shopper wishes to buy a larger amount of product than can fit into a container, or when a shopper deliberately divides small amount of product into containers. Specifically, because the product unit price is the same, a shopper can place a plurality of containers filled with product (i.e., a plurality of objects being weighed) on the weighing units 11, 211, 311, as shown in FIG. 28, so that the weighing units 11, 211 ,311 can find the total product weight value at once.

In such cases, the label printer units 14, 214, 314 print a number of labels corresponding to the number of containers on the weighing units. To wit, because two objects being weighed are resting on the weighing units 11, 211, 311 in FIG. 28, two labels L11, L12 are printed. One label (for example, label L11) displays a price corresponding to the total product weight value, and the other label (for example, label L12) displays information linking with the first label. The labels L11, L12 are attached to each of the containers (receptacle c in FIG. 28) by the shopper.

Thus, when all the related objects being weighed are brought to the register terminals 160a, 160b, ..., and all of the barcodes on the labels (labels L11, L12 in FIG. 28) have been read, the register terminals 160a, 160b, ... register the product. When the barcodes for all of the related objects being weighed have not been scanned (for example, only label L11 is not scanned), an error message appears on the screens of the register terminals 160a, 160b, ....

### (16) Modification P

The weighing device according to the present invention is also capable of handling instances when shoppers put objects into receptacles (i.e., container) they have brought themselves, such as personal shopping bags. In such cases, shoppers may be awarded points for bringing their own receptacles, or be given a discount for bringing their own receptacles to purchase products with. Such receptacles may be purpose-specific receptacles provided in advance by the store, or shoppers' own preferred receptacles that they have brought along.

When purpose-specific containers are used, the purpose-specific containers may be tagged with an IC tag or the like so that the weighing device can identify the purpose-specific containers. In such cases, pre-registering the container ID for identifying the containers, or shopper ID, such as member-identifying information, for identifying shoppers, into the weighing device allows the weighing device to read the IC tags and identify the containers.

The IC tag may also have container weight information indicating container weight registered therein. This allows the weighing device to grasp not only the type but also the weight of the container by reading the IC tag.

### REFERENCE SIGNS LIST

- 10: main unit
- 10a, 10b: support rod
- 11: weighing unit
- 12: camera
- 13: person sensor
- 14: label printer unit
- 15: coupon printer unit
- 16: shopper-side notification unit
- 16a: first touch panel
- 16b: speaker
- 17: second touch panel
- 18: store-side wireless unit
- 19: communication unit
- 20: HDD
- 21: weight range/unit price data
- 22: container information table
- 30: control unit
- 31: identifying unit
- 32: product weight calculation unit
- 33: weight difference calculation unit
- 34: label information-forming unit
- 35: coupon information-forming unit
- 36: notification control unit
- 37: communication control unit
- 100: weighing device
- 150: server
- 160a, 160b, ...: register terminal
- sc1,sc2, sc3, sc4: purchasing procedure guidance screen

## Claims

1. A self-service weighing device for weighing a product placed by a shopper into a container, the product and the container being selected by the shopper, the self-service weighing device comprising:
a weighing unit for receiving the container and the product placed thereon by the shopper and measuring the weight of the container and the product;
a container detector unit for detecting the size of the container;
an identifying unit for identifying the container selected by the shopper based on the size of the container detected by the container detector;
a calculation unit for subtracting the weight of the container identified by the identifying unit from the weight value and calculating the weight of the product;
a printer unit for printing a label displaying the price of the product based on the weight of the product;
a person detector unit for detecting whether or not the shopper is present in the vicinity of the weighing device; and
a shopper-side notification unit for guiding the shopper, using visual and audio representation, through a purchasing procedure including operating the printer unit so as to print the label and attaching the label to the container, in response to detection of the presence of the shopper.

2. The weighing device according to claim 1, further comprising:
a movement detector unit for detecting movement of the attaching of the label.

3. The weighing device according to claim 1 or 2, further comprising:
a store-side notification unit for notifying a store employee in response to the detection of the presence of the shopper using the weighing unit for at least a predetermined length of time or longer.

4. The weighing device according to any one of claims 1 to 3, wherein:
the shopper-side notification unit is configured to notify the shopper, using visual and audio representation, of the difference between the weight calculated for the product and a lower per unit weight price available for the product, in response to determination by the shopper-side notification unit that a lower per unit weight price of the product is available.

5. A self-service weighing device for weighing a product placed by a shopper into a container selected by the shopper, the device comprising:
a weighing unit for receiving the container and the product placed thereon by the shopper and measuring the weight of the container and the product;
a calculation unit for subtracting the weight of the container from the weight measured by the weighing unit and calculating the weight of the product;
a printer unit for printing a label displaying the price of the product based on the weight of the product;
a person detector unit for detecting whether or not the shopper is present in the vicinity of the weighing device; and
a shopper-side notification unit for
guiding the shopper, using visual and audio representation, through a purchasing procedure including operating the printer unit so as to print the label and attaching the label to the container, in response to detection of the presence of the shopper, and in response to detection that the shopper has left the vicinity of the weighing device and a label is remaining in the printer unit, and
producing a notification notifying the shopper that the shopper has forgotten to take the label.

6. The weighing device according to claim 5, further comprising:
a container detector unit for detecting the size of the container; and
an identifying unit for identifying the container selected by the shopper based on the size of the detected container;
the calculating unit for subtracting the weight of the identified container from the weight value and calculating the weight of the product.

7. The weighing device according to claim 5 or 6, further comprising:
a movement detector unit for detecting movement of the attaching of the label.

8. The weighing device according to any one of claims 5 to 7, wherein
the movement detector unit for detecting the weight of the container and product based on whether the movement of the attaching of the label was performed with the container and product having been taken off the weighing unit;
the movement detector unit for detecting movement corresponding to the attaching of the label indicating that the attaching was performed with the container and product having been taken off the weighing unit; and
the shopper-side notification unit configured to notify the shopper that the container and the product must be reweighed using visual and audio representation.

9. The weighing device according to any one of claims 5 to 8, further comprising:
a store-side notification unit for notifying a store employee in response to the person detector unit detecting the presence of the shopper using the weighing unit for at least a predetermined length of time or longer.

10. The weighing device according to any one of claims 5 to 9, wherein:
the shopper-side notification unit for notifying the shopper, using visual and audio representation, of the difference between the weight calculated for the product and a lower per unit weight price available for the product, in response to the shopper-side notification unit determining that a lower per unit weight price of the product is available.

11. The weighing device according to any one of claims 5 to 10, further comprising:
a communication unit for
communicating with at least one of a server and a register terminal, the at least one server storing a variety of information related to the product and the register terminal calculating the amount to be charged to the shopper, and
transmitting label-related information and the results of the detection performed by the movement detector unit to the server and/or the register terminal as grasping information for grasping the incidence of an improper action made by the shopper.
